# EUROPÄISCHE PATENTSCHRIFT

(11) **EP 3 087 372 B1**
(45) Veröffentlichungstag und Bekanntmachung des Hinweises auf die Patenterteilung: **06.01.2021**
(21) Anmeldenummer: 14816202.7
(22) Anmeldetag: 12.12.2014
(51) Int. Cl.: G01N 21/64, G02B 21/00, G02B 21/16, G02B 27/58, G02B 21/36

(54) **HOCHAUFLÖSENDE FLUORESZENZ-MIKROSKOPIE MIT EINEM STRUKTURIERTEN ANREGUNGSSTRAHL**
SUB-DIFFRACTION FLUORESCENCE MICROSCOPY USING A STRUCTURED EXCITATION BEAM
MICROSCOPIE PAR FLUORESCENCE À SOUS-DIFFRACTION UTILISANT UN FAISCEAU D'EXCITATION STRUCTURÉ

(30) Priorität: 23.12.2013 DE 102013114860
(43) Veröffentlichungstag der Anmeldung: 02.11.2016
(73) Patentinhaber: Max-Planck-Gesellschaft zur Förderung der Wissenschaften, 80539 Munich (DE)
(72) Erfinder: HELL, Stefan W., 37085 Göttingen (DE)
(74) Vertreter: REHBERG HÜPPE + PARTNER
(86) Internationale Anmeldenummer: PCT/EP2014/077527
(87) Internationale Veröffentlichungsnummer: WO 2015/097000

(56) Entgegenhaltungen:
- WO-A1-2011/076458
- WO-A2-2006/127692
- DE-A1-102006 009 833
- ANDRIY CHMYROV ET AL: "Nanoscopy with more than 100,000 'doughnuts'", NATURE METHODS, Bd. 10, Nr. 8, 7. Juli 2013 (2013-07-07), Seiten 737-740, XP055179443, ISSN: 1548-7091, DOI: 10.1038/nmeth.2556

## Beschreibung

### TECHNISCHES GEBIET DER ERFINDUNG

Die Erfindung bezieht sich auf ein Verfahren zur Bestimmung der Orte einzelner Moleküle einer Substanz in einer Probe. Das Verfahren dient insbesondere dem Zweck, eine Verteilung der Moleküle der Substanz in der Probe oder einer mit der Substanz markierten Struktur der Probe mit hoher Ortsauflösung abzubilden.

Allgemein ist die Erfindung dem Gebiet der Fluoreszenzlichtmikroskopie zuzuordnen. Das heißt, der Ort eines Moleküls der Substanz in der Probe wird unter Ausnutzung seiner Fluoreszenzeigenschaften bestimmt.

Wenn hier von einem fluoreszenten Zustand eines Moleküls die Rede ist, bedeutet dies, dass es mit Anregungslicht zur Emission von Fluoreszenzlicht anregbar ist, nicht aber, dass es sich schon in einem angeregten, fluoreszierenden Zustand befindet.

Wenn hier von einem nichtfluoreszenten Zustand eines Moleküls die Rede ist, bedeutet dies entsprechend, dass es mit Anregungslicht nicht zur Emission von Fluoreszenzlicht anregbar ist und auch sonst wie nicht fluoresziert, d. h. Fluoreszenzlicht emittiert. Dabei ist nur von Bedeutung, dass das Molekül in dem nichtfluoreszenten Zustand kein Fluoreszenzlicht emittiert, das registriert wird, wenn das Fluoreszenzlicht registriert wird, zu dessen Emission das Molekül in dem fluoreszenten Zustand anregbar ist. So kann das Molekül in dem nichtfluoreszenten Zustand zum Beispiel zur Emission von Fluoreszenzlicht anderer Farbe, d. h. Wellenlänge, anregbar sein, das von dem Fluoreszenzlicht unterscheidbar ist, zu dessen Emission es in dem fluoreszenten Zustand anregbar ist. Konkret kann das Molekül in dem fluoreszenten Zustand zur Emission von grünem Fluoreszenzlicht und in dem nichtfluoreszenten Zustand zur Emission von rotem Fluoreszenzlicht anregbar sein. Ein nichtfluoreszenter Zustand eines Moleküls, in dem es überhaupt nicht zur Emission von Fluoreszenzlicht anregbar ist, wird hier auch als Dunkelzustand bezeichnet.

### STAND DER TECHNIK

Um die Orte von Fluoreszenzlicht emittierenden Molekülen in einer Probe zu bestimmen, gibt es zwei grundsätzliche Vorgehensweisen. Bei der ersten Vorgehensweise werden die Orte aus der räumlichen Verteilung des mit einem Lichtsensorarray registrierten Fluoreszenzlichts bestimmt. Bei der zweiten Vorgehensweise werden die Orte der Moleküle den Positionen einer räumlich begrenzten Anregung zur Emission des Fluoreszenzlichts gleichgesetzt, an denen Fluoreszenzlicht von den Molekülen registriert wird.

Bei der ersten Vorgehensweise, bei der das von der Substanz emittierte Fluoreszenzlicht mit einem Lichtsensorarray registriert wird, auf das die Probe mit einem Objektiv abgebildet wird, ist die erzielbare räumliche Genauigkeit bei der Abbildung der Verteilung der Moleküle der Substanz in der Probe oder einer damit markierten Struktur der Probe normalerweise durch die sogenannte Abbesche Beugungsgrenze beschränkt. So kann aus einzelnen Photonen, die an einer bestimmten Position des Lichtsensorarrays registriert werden, nur mit einer Ortsunschärfe der Größenordnung λ/2nsinα, wobei λ die Wellenlänge des Fluoreszenzlichts ist, n der Brechungsindex des optischen Materials zwischen Probe und Objektiv ist und α der halbe Öffnungswinkel des Objektivs ist, auf einen bestimmten Ort des sie emittierenden Moleküls in der Probe geschlossen werden.

Wenn jedoch das an dem Lichtsensorarray registrierte Fluoreszenzlicht einem einzelnen fluoreszierenden Molekül in der Probe zugeordnet werden kann, kann der Ort des Moleküls, soweit es eine größere Anzahl von Photonen emittiert, mit einer Genauigkeit jenseits der Beugungsgrenze bestimmt werden. Dazu wird der Schwerpunkt der Verteilung der Positionen des Lichtsensorarrays bestimmt, an denen die einzelnen Photonen registriert werden, und daraus der Ort des emittierenden Moleküls abgeleitet. Die bei dieser, Lokalisierung genannten Methode erzielte Genauigkeit wächst mit √n an, wobei n die Anzahl der Photonen ist, die von dem Molekül emittiert und mit dem Lichtsensorarray registriert werden.

Wenn ein Molekül Fluoreszenzlicht mit einer gerichteten räumlichen Verteilung emittiert, wirkt sich dies bei der Bestimmung seines Ortes aus der Intensitätsverteilung des Fluoreszenzlichts über einem Lichtsensorarray durch Lokalisierung in Form eines Ortsfehlers aus. Dieser Ortsfehler hängt von der Orientierung des Moleküls in der Probe ab. Eine gerichtete Verteilung des emittierten Fluoreszenzlichts zeigt sich beispielsweise bei Molekülen, deren Rotationsdiffusionszeiten länger sind als ihre Verweildauer in dem angeregten Zustand, aus dem heraus sie das Fluoreszenzlicht emittieren. (Siehe Engelhardt, J. et al., Molecular orientation affects localization accuracy in superresolution far-field fluorescence microscopy, Nano Lett. 2011 Jan 12;11(1):209-13).

Aus der WO 2006/127692 A2 ist es bekannt, eine interessierende Struktur in einer Probe mit Molekülen einer Substanz zu markieren, die sich in einem nichtfluoreszenten Ausgangszustand befinden, aber mit Einstelllicht in einen fluoreszenten Zustand umgeschaltet werden können. So kann mit dem Einstelllicht ein geringer Anteil der Moleküle in den fluoreszenten Zustand gebracht werden, bei dem nächstbenachbarte Moleküle in dem fluoreszenten Zustand einen größeren Abstand als die Beugungsgrenze aufweisen. Bei einer anschließenden Beaufschlagung mit Anregungslicht emittieren nur die in dem fluoreszenten Zustand befindlichen Moleküle Fluoreszenzlicht. So kann das Fluoreszenzlicht von den einzelnen Molekülen in dem fluoreszenten Zustand getrennt registriert werden; und die Orte der einzelnen Moleküle können trotz hoher absoluter Konzentration der Moleküle der Substanz durch Lokalisierung mit einer Genauigkeit jenseits der Beugungsgrenze bestimmt werden. Eine Abbildung der Verteilung der Moleküle der Substanz wird schrittweise dadurch erreicht, dass die Schritte des Einstellens eines geringen Anteils der Moleküle in dem fluoreszenten Zustand, des Anregens dieser Moleküle zur Emission von Fluoreszenzlicht und des Registrierens des Fluoreszenzlicht mit einem Lichtsensorarray wiederholt und damit statistisch bedingt für immer andere Moleküle der Substanz durchgeführt werden.

Die WO 2006/127692 A2 beschreibt auch, dass das Aktivieren einer Teilmenge der Moleküle der Substanz in einen fluoreszenten Zustand auf andere optische Abbildungsverfahren übertragen werden kann. Dabei können durch eine Intensitätsverteilung des Anregungslichts mit durch Minima begrenzte Maxima die Moleküle der Substanz speziell in bestimmten Ebenen oder anderen räumlichen Untereinheiten der Probe zur Emission von Fluoreszenzlicht angeregt werden.

Das aus der WO 2006/127692 A2 bekannte Verfahren benötigt zur Bestimmung der Position jedes Moleküls der Substanz mit einer Genauigkeit jenseits der Beugungsgrenze eine mit der gewünschten räumlichen Genauigkeit ansteigende Anzahl von Photonen von dem Molekül. Zudem stellt das Verfahren hohe Anforderungen an die Moleküle, damit diese zu einem kleinen Anteil in den fluoreszenten Zustand geschaltet werden können, wobei die in dem fluoreszenten Zustand befindlichen Moleküle einen größeren Abstand als die Beugungsgrenze aufweisen. Typischerweise handelt es sich bei den Molekülen um zwischen zwei Konformationszuständen schaltbare Proteinen, von denen nur einer fluoreszent ist, oder um photochrome Fluorophore.

Das aus der WO 2006/127692 A2 bekannte Verfahren wird auch als PALM, d. h. als photoaktivierte Lokalisierungsmikroskopie, bezeichnet. Ein sehr ähnliches, als STORM (Stochastische Optische Rekonstruktionsmikroskopie) bezeichnetes Verfahren weist grundsätzlich dieselben Vor- und Nachteile auf.

Aus der US 8,174,692 B2 ist es bekannt, dass auch normale Farbstoffe, die nicht einschaltbar sind, sondern einen fluoreszenten Ausgangszustand aufweisen, und auch nicht zwischen zwei Konformationszuständen geschaltet werden können, von denen nur einer fluoreszent ist, als Substanz genutzt werden können, um den Ort einzelner Moleküle der Substanz durch Lokalisierung zu bestimmen. Dabei wird die Probe mit Anregungslicht, das die Moleküle der Substanz zugleich mit einer gewissen Übergangswahrscheinlichkeit in einen relativ langlebigen elektronischen Dunkelzustand überführt, mit einer so hohen Intensität beaufschlagt, dass sich zwischen den aktuell in ihrem fluoreszenten Zustand befindlichen Molekülen Abstände oberhalb der Beugungsgrenze einstellen.

Die jeweils in dem fluoreszenten Zustand befindlichen Moleküle werden von dem Anregungslicht zur Emission von Fluoreszenzlicht angeregt, das mit einem Lichtsensorarray ortsaufgelöst registriert wird. Auf diese Weise werden sukzessive verschiedene Moleküle der Substanz lokalisiert, da Moleküle, von denen bereits Photonen registriert wurden, in den Dunkelzustand gelangen, aus dem andere Moleküle mit einer gewissen Übergangswahrscheinlichkeit in den fluoreszenten Zustand zurückkehren. Dieses bekannte Verfahren kann kontinuierlich durchgeführt werden, d. h. es können ständig Frames aus dem Lichtsensorarray ausgelesen werden, während die Probe mit einer hohen Intensität des Anregungslichts beaufschlagt wird, die die Substanz im Wesentlichen in ihrem Dunkelzustand hält und nur vereinzelte Moleküle zur Emission von Fluoreszenzlicht anregt.

Das aus der US 8,174,692 B2 bekannte Verfahren wird auch als GSDIM (Ground State Depletion Individual Molecule Return Microscopy) bezeichnet.

Die hohe Genauigkeit bei der Bestimmung der Orte einzelner fluoreszenter Moleküle durch Lokalisierung wird nur in der x- und y-Richtung quer zur optischen Achse erreicht, nicht aber in der z-Richtung der optischen Achse des Objektivs mit dem die jeweilige Probe auf das Lichtsensorarray abgebildet wird. Aus Aquino, D. et al., Two-color nanoscopy of three-dimensional volumes by 4Pi detection of stochastically switched fluorophores, Nature Meth. 8, 353-359 (2011) ist es jedoch bekannt, dass die Orte der einzelnen fluoreszenten Moleküle bei einem PALM-, STORM- oder GSDIM-Verfahren durch eine 4Pi-Methode mit einander entgegen gerichteten Objektiven in der z-Richtung der optischen Achse durch Abtasten mit einer x-y-Messebene bestimmt werden können.

Wenn die Orte von Fluoreszenzlicht emittierenden Molekülen den Positionen ihrer räumlich begrenzten Anregung zur Emission des Fluoreszenzlichts gleichgesetzt werden, wobei die jeweilige Probe mit den Orten ihrer räumlich begrenzten Anregung abgetastet oder abgescannt wird, spricht man von Rasterfluoreszenzlichtmikroskopie. Auch für die räumliche Genauigkeit, die bei der Rasterfluoreszenzlichtmikroskopie erzielt wird, gilt normalerweise die Abbesche Beugungsgrenze, hier bei der Wellenlänge des Anregungslichts. Es sind aber verschiedene Verfahren bekannt, mit denen die Genauigkeit bei der Rasterfluoreszenzlichtmikroskopie durch Verkleinerung des wirksamen räumlichen Bereichs der Anregung der Moleküle der Substanz zur Emission von Fluoreszenzlicht über die Beugungsgrenze hinweg erhöht werden kann.

Bei der Rasterfluoreszenzlichtmikroskopie reicht die Registrierung irgendwelcher Photonen aus, um zu erkennen, dass im aktuellen Bereich der Anregung Fluoreszenzlicht emittierende Moleküle der Substanz vorliegen. Die Anzahl der registrierten Photonen wird ausschließlich zur Bestimmung der lokalen Konzentration der Moleküle der Substanz im aktuellen Bereich der Anregung verwendet.

Bei der STED (Stimulated Emission Depletion)-Fluoreszenzlichtmikroskopie wird eine mit Anregungslicht bewirkte Anregung von Molekülen der Substanz, mit der eine Struktur einer Probe markiert ist, in einem Umfeld eines interessierenden Messpunkts durch gerichtete Emission wieder beseitigt. Die gerichtete Emission wird mit STED-Licht stimuliert und verhindert die Emission von Fluoreszenzlicht von den Molekülen, so dass das Fluoreszenzlicht nur noch aus dem Bereich stammen kann, in dem die Anregung nicht beseitigt wird. Der Bereich, in dem die Anregung nicht beseitigt wird, kann sehr klein gehalten werden, indem er durch eine Nullstelle der Intensitätsverteilung des STED-Lichts definiert wird und die absolute Intensität des STED-Lichts hoch gewählt wird, so dass es bereits sehr nahe der Nullstelle die Anregung der Moleküle vollständig beseitigt.

Statt eine vorher bewirkte Anregung der Moleküle in Teilen der Probe wieder abzuregen, kann Licht mit einer eine Nullstelle aufweisenden Intensitätsverteilung auch dazu genutzt werden, die Moleküle der Substanz außerhalb der Nullstelle durch Konformationsänderung in einen nichtfluoreszenten Zustand zu schalten, wie dies bei der RESOLFT-Fluoreszenzlichtmikroskopie geschieht, oder in einen elektronischen Dunkelzustand, wie es bei der GSD (Ground State Depletion)-Fluoreszenzlichtmikroskopie der Fall ist.

Aus Andriy Chmyrov et al., "Nanoscopy with more than 100,000 'doughnuts'", Nature Methods, Bd. 10, Nr. 8, 7. Juli 2013, S. 737-740, ist ein RESOLFT-Verfahren bekannt, bei dem eine Intensitätsverteilung von Schaltlicht erzeugt wird, die eine Vielzahl von Intensitätsminima aufweist. Außerhalb eines Bereichs von d ≈ D/(1+I/I_{S})^{1/2} < D um die Nullstellen der durch Interferenz gebildeten Intensitätsverteilung werden schaltbare Fluorophore mit dem Schaltlicht aus- oder eingeschaltet. Dabei ist D die Beugungsgrenze, I_{S} ist eine von den schaltbaren Fluorophoren abhängige Sättigungsintensität des Lichts, bei der 50 % der beaufschlagten Fluorophore aus- oder eingeschaltet werden, und I ist die Intensität des Schaltlichts in den die Intensitätsminima begrenzenden Intensitätsmaxima. Wenn anschließend die Probe mit Anregungslicht zur Emission von Fluoreszenzlicht angeregt wird, stammt dieses nur oder gerade nicht aus den Bereichen mit den kleinen Abmessungen, weil nur innerhalb dieser Bereiche noch nicht aus- bzw. eingeschaltete Fluorophore vorhanden sind. Daher kann das für jede Lage jedes dieser Bereiche separat registrierte Fluoreszenzlicht der jeweiligen Lage des jeweiligen Bereichs zugeordnet werden, dessen Abmessungen kleiner als die Beugungsgrenze sind. Um die gesamte Probe abzubilden, wird bei dem bekannten RESOLFT-Verfahren die Probe in Schritten nicht größer als d/2 mit den Minima der Intensitätsverteilung des Schaltlichts abgetastet.

Aus der DE 10 2005 034 443 A1 ist ein GSD-Verfahren bekannt, bei dem nur mit Licht einer Wellenlänge gearbeitet wird. Bis zu einer bestimmten Intensität regt dieses Licht die Moleküle der Substanz in der Probe primär zur Emission von Fluoreszenzlicht an. Oberhalb dieser Intensität überführt das Licht die Moleküle der Substanz im Wesentlichen vollständig in einen Dunkelzustand. Indem eine Intensitätsverteilung, mit der das Licht auf eine Probe aufgebracht wird, ein unterhalb der beschriebenen Intensität gelegenes lokales Minimum aufweist, wird der Bereich, in dem die Moleküle der Substanz effektiv zur Emission von Fluoreszenzlicht angeregt werden, räumlich eingeschränkt.

Aus der WO 2012/171999 A1 ist ein Verfahren bekannt, bei dem durch schnelles Abtasten einer Probe mit einem Anregungslichtstrahl, der von einer Intensitätsverteilung von STED-Licht mit einem Minimum am Fokus des Anregungslichtstrahls umgeben ist, bei jedem von vielen aufeinanderfolgenden Scandurchgängen Fluoreszenzlicht nur von einzelnen Molekülen registriert wird. Die Orte der Moleküle, von denen Fluoreszenzlicht registriert wird, werden den zugehörigen Positionen des Fokus des Anregungslichtstrahls gleichgesetzt.

Aus der DE 10 2011 055 367 A1 ist ein Verfahren zum Verfolgen eines einzelnen fluoreszenten Moleküls bekannt. Das Molekül wird mit Anregungslicht zur Emission von Fluoreszenzlicht veranlasst, und das Fluoreszenzlicht wird registriert. Dabei wird das Anregungslicht mit einer ein lokales Minimum aufweisenden Intensitätsverteilung auf die Probe gerichtet, und das Minimum wird dem sich in der Probe bewegenden Molekül nachgeführt. Zu diesem Zweck wird die Intensitätsverteilung des Anregungslichts so gegenüber der Probe verschoben, dass eine Intensität des von dem Partikel emittierten Fluoreszenzlichts minimal bleibt. Tatsächlich handelt es sich bei der Intensität des von dem Partikel emittierten Fluoreszenzlichts um eine Rate, mit der einzelne Photonen aus dem Minimum der Intensitätsverteilung des Anregungslichts von dem jeweiligen Molekül emittiert werden. Bei dem Minimum kann es sich um eine Nullstelle der Intensitätsverteilung des Anregungslichts handeln.

Aus der DE 10 2010 028 138 A1 ist ein Verfahren zum Bestimmen der Verteilung einer Substanz in einem Messgebiet durch Abtasten mit einer Messfront bekannt. Über eine Tiefe der Messfront, die kleiner als die Beugungsgrenze bei der Wellenlänge eines optischen Signals ist, steigt die Intensität des optischen Signals derart an, dass ein Anteil der Substanz in einem Messzustand zunächst von nicht vorhanden anwächst und dann wieder auf nicht vorhanden abfällt. Die Messfront wird in Gegenrichtung zu dem Anstieg der Intensität des optischen Signals über das Messgebiet verschoben. Das Messsignal wird zumindest aus dem Bereich der Messfront erfasst und der jeweiligen Position der Messfront in dem Messgebiet zugeordnet.

Bei der sogenannten SSIM (Saturated Structured Illumination Microscopy, siehe Gustafsson, M.G.L., Proc. Natl. Acad. Sci. USA 102, 13081-13086 (2005)) wird eine Probe in unterschiedlichen Richtungen mit einer Intensitätsverteilung von Anregungslicht abgetastet, die eine linienförmige Nullstelle und außerhalb der Nullstelle so hohe Intensitäten aufweist, dass eine Sättigung der Intensität des Fluoreszenzlichts von angeregten Molekülen einer fluoreszenten Substanz in der Probe erreicht wird. Während des Abtastens registriertes Fluoreszenzlicht aus der Probe variiert durch die jeweils im Bereich der Nullstelle befindlichen Moleküle der fluoreszenten Substanz, die nicht zu dem Fluoreszenzlicht beitragen. Ausgewertet wird dieses Fluoreszenzlicht nach Raumfrequenzen, die beim Scannen in den verschiedenen Richtungen auftreten und aus denen dann eine Abbildung der Verteilung der fluoreszenten Moleküle in der Probe rekonstruiert wird.

Die SSIM nutzt keine Verteilung der fluoreszenten Moleküle in der Probe, bei der ein mittlerer Abstand der Moleküle größer als die Beugungsgrenze bei der Wellenlänge des Anregungslichts oder des Fluoreszenzlichts ist. Durchführbar ist die SSIM nur mit fluoreszenten Molekülen, die bis zur Sättigung der Intensität des von ihnen erhaltenen Fluoreszenzlichts anregbar sind, ohne dadurch in einen Dunkelzustand überführt zu werden. Erhalten wird nur eine indirekte Abbildungen der Verteilung der Moleküle der fluoreszenten Substanz in der Probe. Positionen einzelner fluoreszenter Moleküle in der Probe werden nicht bestimmt.

Aus der WO 2011/076458 A1 ist ein Lumineszenzmikroskopie-Verfahren bekannt, bei dem eine Substanz in einer Probe, die wiederholt von einem ersten Zustand, in dem sie durch Anregungslicht zur Abgabe von Lumineszenzlicht anregbar ist, in einen zweiten Zustand überführbar ist, in dem sie durch Anregungslicht nicht zur Abgabe von Lumineszenzlicht anregbar ist, durch Einstrahlung von Schaltlicht in die Probe in den ersten Zustand gebracht. Weiter wird die in der Probe vorhandene Substanz durch Einstrahlung von Anregungslicht zur Abgabe von Lumineszenzlicht angeregt, und die die Lumineszenzlicht abgebende Probe wird abgebildet. Dabei erfolgt eine hochaufgelöste Selektion von sich senkrecht zu einer Probenoberfläche erstreckenden Probenbereichen, indem entweder das Schaltlicht oder das Anregungslicht als strukturierte Beleuchtung der Probe eingestellt wird. Die hochaufgelöste Selektion der Probenoberfläche erfolgt, indem das Schaltlicht und/oder das Anregungslicht als TIRF-Beleuchtung der Probe eingestrahlt wird. Zu dem TIRF-Konzept, bei dem die Fluoreszenz der Probe über ein evaneszentes Feld angeregt wird, indem das Anregungslicht unterhalb des Totalreflektionswinkels an die Grenze von Deckglas und Probe eingestrahlt wird, wird auf die Veröffentlichung Thompson NL et al., "Measuring Surface Dynamics of Biomolecules by Total Internal Reflexion Fluorescence with Photobleaching Recovery or Correlation Spectroscopy", Biophys J., 33, Nr. 3,1981, S. 435-454, verwiesen.

### AUFGABE DER ERFINDUNG

Der Erfindung liegt die Aufgabe zugrunde, ein Verfahren zur Bestimmung des Ortes einzelner Moleküle einer Substanz in einer Probe aufzuzeigen, mit dem eine räumlich hochaufgelöste Abbildung einer Verteilung der Moleküle in der Substanz in der Probe unter Auswertung von Fluoreszenzlicht von den einzelnen Molekülen erhalten werden kann, wobei das Fluoreszenzlicht zusätzlich zur Bestimmung des Ortes der einzelnen Moleküle durch Lokalisierung verwendet werden kann.

### LÖSUNG

Die Aufgabe der Erfindung wird durch ein Verfahren nach dem unabhängigen Patentanspruch 1 gelöst. Vorteilhafte Ausführungsformen des Verfahrens sind in den abhängigen Patentansprüchen definiert.

### BESCHREIBUNG DER ERFINDUNG

Die Erfindung stellt ein Verfahren zur Bestimmung der Orte einzelner Moleküle einer Substanz in einer Probe bereit, wobei sich die einzelnen Moleküle der Substanz in einem fluoreszenten Zustand befinden, in dem sie mit Anregungslicht zur Emission von Fluoreszenzlicht anregbar sind, und wobei Abstände zwischen den einzelnen Molekülen der Substanz in einem interessierenden Bereich der Probe einen Mindestwert einhalten.

Das Verfahren weist die bereits aus der WO 2006/127692 A1 bekannten Schritte des Anregens der einzelnen Moleküle der Substanz mit dem Anregungslicht zur Emission von Fluoreszenzlicht, wobei eine Intensitätsverteilung des Anregungslichts mindestens ein lokales Minimum aufweist, und des Registrierens des Fluoreszenzlichts von den angeregten einzelnen Molekülen der Substanz für verschiedene Positionen des mindestens einen Minimums in dem interessierenden Bereich der Probe auf.

Erfindungsgemäß ist der Mindestwert der Abstände der einzelnen Moleküle der Substanz in dem interessierenden Bereich der Probe d = λ/(2nsinα √(1 + I/I_{S})), wobei λ die Wellenlänge des Anregungslichts ist, n der Brechungsindex des optischen Materials ist, in dem das mindestens eine Minimum ausgebildet wird, α der halbe Öffnungswinkel einer optischen Anordnung ist, mit der das Anregungslicht auf die Probe gerichtet wird, I die maximale Intensität des Anregungslichts in der Probe ist und I_{S} eine von der Substanz abhängige Fluoreszenzanregungssättigungsintensität des Anregungslichts ist. Bei der Fluoreszenzanregungssättigungsintensität I_{S} wird ein bestimmter Prozentsatz der theoretisch möglichen Intensität des Fluoreszenzlichts von den Molekülen der Substanz erreicht, ab dem man auch von der Sättigung der Intensität des Fluoreszenzlichts spricht. Typischerweise beträgt dieser Prozentsatz 50 % der theoretisch möglichen Intensität des Fluoreszenzlichts. Der Mindestwert d entspricht der Genauigkeit bei der räumlichen Abbildung, wie sie bei der hoch auflösenden STED-, GSD- und RESOLFT-Rasterfluoreszenzlichtmikroskopie erreicht wird.

Es ist nicht unbedingt von Bedeutung, wie erreicht wird, dass die Abstände zwischen den einzelnen Molekülen der Substanz, die sich in dem fluoreszenten Zustand befinden, in dem interessierenden Bereich der Probe den Mindestwert d einhalten. Es ist auch nicht notwendig, dass alle Moleküle der Substanz in dem fluoreszenten Zustand mit ihren Abständen den Mindestwert einhalten. Die Orte von fluoreszenten Molekülen in einem geringeren Abstand können mit dem hier beschriebenen Verfahren jedoch nicht bestimmt werden.

Erfindungsgemäß ist die Intensität des Fluoreszenzlichts von einem einzelnen Molekül am Ort des lokalen Minimums der Intensitätsverteilung des Anregungslichts maximal halb so groß wie an einem Ort der maximalen Intensität des Anregungslichts in der Probe. Es versteht sich, dass ein größerer Intensitätskontrast, das heißt ein noch ausgeprägteres lokales Minimum, in dem die Intensität des Fluoreszenzlichts von einem einzelnen Molekül auf einen kleineren Anteil der maximalen Intensität des Fluoreszenzlichts von dem einzelnen Molekül zurückgeht, günstig ist. So kann die Intensität des Fluoreszenzlichts von dem einzelnen Molekül beispielsweise um mindestens 80 % auf höchsten 20 % oder um mindestens 90 % auf höchstens 10 % der maximalen Intensität zurückgehen. Idealerweise geht die Intensität des Fluoreszenzlichts von dem einzelnen Molekül in dem lokalen Minimum auf null zurück, d. h. es handelt sich um eine Nullstelle der Intensitätsverteilung des Anregungslichts.

Erfindungsgemäß sind Abstände zwischen nächstbenachbarten Positionen des mindestens einen Minimums, in denen das Fluoreszenzlicht von den angeregten einzelnen Molekülen der Probe registriert wird, nicht größer als der halbe Mindestwert d. Die Orte der einzelnen Moleküle der Substanz werden dann erfindungsgemäß aus dem Verlauf der Intensität des Fluoreszenzlichts von dem jeweiligen Molekül über den Positionen des mindestens einen Minimums in dem interessierenden Bereich der Probe abgeleitet.

Wenn ein fluoreszentes Molekül in den Bereich des Minimums gelangt, geht die Anregung des Moleküls zur Emission von Fluoreszenzlicht und entsprechend die Intensität des von ihm emittierten und in der Folge registrierten Fluoreszenzlichts zurück. Da bei dem erfindungsgemäßen Verfahren einzelne fluoreszente Moleküle betrachtet werden, von denen das Fluoreszenzlicht individuell registriert und entsprechend ausgewertet werden kann, lässt sich aus dem Verlauf der Intensität des registrierten Fluoreszenzlichts in Abhängigkeit von den Positionen des Minimums der Ort des jeweiligen fluoreszenten Moleküls in der Probe mit erhöhter räumlicher Genauigkeit bestimmen.

Dies gilt auch dann, wenn der oben definierte Mindestabstand d = λ/(2nsinα √(1 + I/I_{S})) der einzelnen Moleküle in der Probe deutlich kleiner als die Beugungsgrenze λ/2nsinα bei der Wellenlänge λ des Anregungslichts und auch bei der Wellenlänge des Fluoreszenzlichts ist, weil die maximale Intensität I des Anregungslichts in der Probe deutlich größer als die Fluoreszenzanregungssättigungsintensität I_{S} ist. Auch dann kann das Fluoreszenzlicht , das von der Probe registriert wird zumindest einer kleinen Gruppe von einzelnen Molekülen zugeordnet werden, und die Intensität der Fluoreszenzlichts geht zu einem signifikanten Anteil zurück, wenn jeweils eines der Moleküle in den Bereich des lokalen Minimums der Intensität des Anregungslichts gelangt. Dieser Rückgang ist beim Einhalten des Mindestabstands d der einzelnen Moleküle in der Probe jeweils genau einem einzelnen Molekül zuzuordnen.

Dafür, dass dieser Rückgang erfasst und sein Verlauf räumlich aufgelöst wird, sorgen die kleinen Abstände der Positionen des Minimums, für die das Fluoreszenzlicht registriert wird, von maximal d/2. D. h. bei dem erfindungsgemäßen Verfahren wird der interessierende Bereich der Probe mit dem lokalen Minimum der Intensitätsverteilung des Anregungslichts mit einer Schrittweite von maximal d/2 abgetastet.

Die optische Anordnung, mit der das Anregungslicht auf die Probe gerichtet wird, kann ein Objektiv sein, es kann sich aber auch um eine andere optische Anordnung handeln, mit der zwei Teilstrahlen des Anregungslichts unter einem Winkel überlagert werden, um das mindestens eine Minimum durch Interferenz auszubilden. Dann ist α der halbe Winkel zwischen diesen Teilstrahlen oder der Winkel zwischen jedem der Teilstrahlen und der optischen Achse. n kann der Brechungsindex der Probe sein, wenn das Minimum direkt in der Probe ausgebildet wird, oder der Brechungsindex eines an die Probe angrenzenden Materials, wenn das Minimum in diesem ausgebildet wird. Dies ist zum Beispiel dann der Fall, wenn eine ähnliche optische Anordnung wie bei der TIRFM (Total Internal Reflection Fluorescence Microscopy) für die Ausbildung des Minimums verwendet wird.

Da die Bestimmung der Orte der einzelnen Moleküle allein auf der in jeder Position des Minimums bestimmten Intensität des Fluoreszenzlichts von dem jeweiligen Molekül beruht, ohne dass die genaue Richtung Berücksichtigung findet, in der das Fluoreszenzlicht von dem Molekül emittiert wird, zählt das erfindungsgemäße Verfahren zur Rasterfluoreszenzlichtmikroskopie; und die Bestimmung der Orte der einzelnen Moleküle ist von der Orientierung der Moleküle unabhängig.

Konkret wird zur Ableitung der Orte der einzelnen Moleküle der Substanz aus dem Verlauf der Intensität des Fluoreszenzlichts eine Funktion mit lokalem Minimum an den Verlauf der Intensität des Fluoreszenzlichts von dem jeweiligen Molekül über den Positionen des mindestens einen Minimums angefittet. Dann kann der Ort des jeweiligen Moleküls der Position des lokalen Minimums der angefitteten Funktion gleichgesetzt werden. Die Funktion kann eine quadratische Funktion sein. Eine Grundform der Funktion, die angefittet wird, kann aber auch individuell an den Intensitätsverlauf des Fluoreszenzlichts von einem Molekül der jeweiligen Substanz als Antwort auf den Intensitätsverlauf des Anregungslichts im Umfeld des mindestens einen Minimums angepasst werden.

Es fällt auch in den Rahmen der vorliegenden Erfindung, dass der Ort des jeweiligen Moleküls einer Position des mindestens einen Minimums gleichgesetzt wird, die sich dadurch auszeichnet, dass von dem jeweiligen Molekül weniger Fluoreszenzlicht registriert wird, als in in verschiedenen Richtungen nächstbenachbarten Positionen des Minimums. Wenn das Minimum bzw. ein anregungsschwacher Bereich um das Minimum, in dem das jeweilige Molekül nur zur Emission von Fluoreszenzlicht mit einer Minimalintensität angeregt wird, das jeweilige Molekül trifft, wird für diese Position des Minimums nur die Minimalintensität des Fluoreszenzlichts von dem Molekül registriert. Da dies grundsätzlich auch andere Ursachen haben kann, kann eine Position des Minimums, in der nur die Minimalintensität des Fluoreszenzlichts von dem jeweiligen Molekül registriert wird, aber nur dann dem Ort des Moleküls gleichgesetzt werden, wenn in in verschiedenen Richtungen nächstbenachbarten Positionen des Minimums mehr Fluoreszenzlicht als die Minimalintensität registriert wird. Soweit diese Bedingungen erfüllt sind, kann der Ort des jeweiligen Moleküls in der Probe mit einer räumlichen Genauigkeit von den Abmessungen des anregungsschwachen Bereichs um das Minimum bestimmt werden.

Wenn die Minimalintensität null oder nahe bei null ist, werden für diese Art der Ortsbestimmung nur sehr wenige Photonen des Fluoreszenzlichts von dem jeweiligen Molekül benötigt, nämlich nur sehr wenige Photonen in der Position des Minimums, in der die Minimalintensität des Fluoreszenzlichts registriert wird, und jeweils nur wenige Photonen mehr in den in verschiedenen Richtungen nächstbenachbarten Positionen des Minimums, bis klar ist, dass die Intensität des Fluoreszenzlichts dort über die Minimalintensität hinaus geht. Dadurch kann das Minimum sehr schnell zwischen seinen einzelnen Positionen verschoben werden. Bei einer Minimalintensität von null reicht es aus, festzustellen, ob Fluoreszenzlicht von dem jeweiligen Molekül kommt oder nicht. Hierfür muss nur so lange an der jeweiligen Position gewartet werden, wie es maximal dauern sollte, zumindest mehrere Photonen des Fluoreszenzlichts von dem jeweiligen Molekül zu erhalten. Eine Minimalintensität von null wird in der Regel nur dann in einem anregungsschwachen Bereich um ein lokales Minimum realisiert, wenn das lokale Minimum eine Nullstelle der Intensitätsverteilung des Anregungslichts ist.

Wenn der anregungsschwache Bereich um das Minimum zur Bestimmung der Orte der einzelnen Moleküle ausgenutzt werden soll, muss sichergestellt werden, dass jedes einzelne Molekül mit dem anregungsschwachen Bereich getroffen wird. Dies wird erreicht, wenn die Abstände zwischen nächst benachbarten Positionen des mindestens einen Minimums, in denen das Fluoreszenzlicht von den angeregten einzelnen Molekülen der Substanz registriert wird, d. h. die Schrittweiten, mit denen der interessierende Bereich der Probe abgetastet wird, nicht größer als ein Durchmesser des anregungsschwachen Bereichs sind, so dass der interessierende Bereich der Probe vollständig mit dem anregungsschwachen Bereich abgetastet wird.

Wenn die Intensität des Anregungslichts angrenzend an das mindestens eine Minimum so hoch eingestellt wird, dass eine Sättigung bei der Intensität des Fluoreszenzlichts erreicht wird, das von dem mit dem Anregungslicht angeregten einzelnen Molekülen emittiert wird, wird der anregungsschwache Bereich um das Minimum, in dem das jeweilige Molekül nur zur Emission von Fluoreszenzlicht mit der Minimalintensität angeregt wird, und auch ein darum liegender Bereich, in dem die Intensität des Fluoreszenzlichts von dem jeweiligen Molekül von seiner Entfernung zu dem Minimum abhängt, stark räumlich eingeengt. Dies ist gleichbedeutend mit einer Steigerung der Ortsgenauigkeit des erfindungsgemäßen Verfahrens. Hiervon kann zwar nur dann Gebrauch gemacht werden, wenn die Positionen des Minimums in der Probe, in denen die Intensität des Fluoreszenzlichts von den einzelnen Molekülen bestimmt wird, entsprechend kleine Abstände aufweisen. Dies ist aber durch die maximalen Abstände zwischen nächst benachbarten Positionen des mindestens einen Minimums, in denen das Fluoreszenzlicht von den angeregten einzelnen Molekülen der Substanz registriert wird, von d/2 sichergestellt.

Die einzelnen Moleküle in dem fluoreszenten Zustand, deren mittlerer Abstand in dem interessierenden Bereich der Probe größer als die Beugungsgrenze bei der Wellenlänge des Anregungslichts und des Fluoreszenzlichts ist, können insbesondere dadurch realisiert werden, dass die Moleküle der Substanz mit einem Einstellsignal aus ihrem fluoreszenten Zustand in einen nichtfluoreszenten Zustand oder aus einem nichtfluoreszenten Zustand in ihren fluoreszenten Zustand überführbar sind, wobei eine Übergangswahrscheinlichkeit zwischen den Zuständen (bis eine Sättigung erreicht ist) mit der Intensität des Einstellsignals ansteigt. Dann kann bei einer so hohen Dichte der Moleküle in dem interessierenden Bereich der Probe, dass die Abstände zwischen nächstbenachbarten Molekülen der Substanz kleiner als der Mindestwert d sind, mit dem Einstellsignal jeweils nur ein Anteil der Moleküle in dem fluoreszenten Zustand belassen bzw. in den fluoreszenten Zustand überführt werden. Dieser Anteil der Moleküle der Substanz kann mittels der Intensität des Einstellsignals so eingestellt werden, dass die Abstände zwischen den einzelnen Molekülen der Substanz in dem fluoreszenten Zustand den Mindestwert d einhalten. Da es von Übergangswahrscheinlichkeiten abhängt, welche Moleküle der Substanz jeweils zu dem Anteil gehören, der sich in dem fluoreszenten Zustand befindet, können so nacheinander die Orte verschiedener Moleküle der Substanz in der Probe bestimmt werden.

Mit den Molekülen, deren Orte bereits bestimmt wurden, kann unterschiedlich verfahren werden. Sie können grundsätzlich dauerhaft weggebleicht werden. Sie können auch unter Einwirkung eines Rückführsignals und/oder spontan, d. h. allein durch thermische Anregung, in ihren ursprünglichen nichtfluoreszenten Zustand zurückkehren oder mit dem Einstelllicht wie die meisten anderen Moleküle in ihren nichtfluoreszenten Zustand überführt werden. Dann können mit dem Einstellsignal und ggf. dem Rückführsignal wiederholt oder fortlaufend für jeweils andere einzelne Moleküle in dem fluoreszenten Zustand die Abstände zwischen nächsten Nachbarn auf den Mindestwert d eingestellt werden. Wenn dabei jeweils die Positionen der einzelnen Moleküle in dem fluoreszenten Zustand bestimmt werden, wird sukzessive eine Abbildung der Verteilung der Moleküle der Substanz in der Probe erhalten.

Beim nacheinander Ermitteln der Orte verschiedener Anteile der Substanz kann die Probe kontinuierlich oder intermittierend mit dem Einstellsignal und ggf. mit dem Rückführsignal beaufschlagt werden. Das Registrieren des Fluoreszenzlichts von der Probe kann ebenfalls kontinuierlich oder intermittierend erfolgen. In jedem Fall erfolgt es aber getrennt für jede Position des Minimums des Anregungslichts in der Probe. Dies schließt aber nicht aus, dass die Position des Minimums in der Probe kontinuierlich verschoben wird, soweit sich das Minimum während eines Zeitraums, für den das Fluoreszenzlicht registriert wird, nur wenig, jedenfalls nicht weiter als d/4 bewegt.

Das Einstellsignal, mit dem die Moleküle der Substanz zwischen ihrem fluoreszenten Zustand und ihrem nichtfluoreszenten Zustand überführbar sind, um einen Anteil der Moleküle in dem fluoreszenten Zustand einzustellen, in dem die Abstände zwischen nächsten Nachbarn den Mindestwert einhalten, kann grundsätzlich irgendein chemisches oder physikalisches Signal sein. Bevorzugt handelt es sich um Einstelllicht.

Konkret können die Moleküle der Substanz mit dem Einstelllicht aus ihrem fluoreszenten Zustand in ihren nichtfluoreszenten Zustand überführt werden, wobei der nichtfluoreszente Zustand der Moleküle der Substanz ein elektronischer Energiezustand sein kann. Im letzteren Fall regt das Einstelllicht die fluoreszenten Moleküle der Substanz typischerweise auch zur Emission von Fluoreszenzlicht an, und sie werden erst nach der Emission einiger Photonen des Fluoreszenzlichts in den nichtfluoreszenten Zustand überführt. Das Einstelllicht kann damit zugleich das bei dem erfindungsgemäßen Verfahren verwendete Anregungslicht sein, so dass nur Licht mit einer Wellenlänge zum Einsatz kommen muss.

Stellt man die zuletzt beschriebene Ausführungsform des erfindungsgemäßen Verfahrens unter Abgrenzung zu dem als GSDIM bekannten Stand der Technik dar, handelt es sich wie bei GSDIM übereinstimmend um ein Verfahren zur Bestimmung des Ortes einzelner Moleküle einer Substanz in einer Probe, um eine räumlich hochaufgelöste Abbildung einer Verteilung der Moleküle der Substanz in der Probe zu erhalten, wobei die Moleküle der Substanz anfangs einen fluoreszenten Zustand aufweisen, wobei die Moleküle der Substanz in ihrem fluoreszenten Zustand mit Anregungslicht zur Emission von Fluoreszenzlicht anregbar sind, wobei die Moleküle der Substanz mit dem Anregungslicht aus ihrem fluoreszenten Zustand in einen nichtfluoreszenten Dunkelszustand überführbar sind, wobei die Moleküle der Substanz aus ihrem nichtfluoreszenten Zustand in ihren fluoreszenten Zustand zurückkehren und wobei Abstände zwischen den Molekülen der Substanz in der Probe kleiner als ein Mindestwert sind.

Auch noch übereinstimmend mit GSDIM weist diese Ausführungsform des erfindungsgemäßen Verfahrens die Schritte auf des Einstellens eines solchen Anteils der Moleküle der Substanz in dem fluoreszenten Zustand mit dem Anregungslicht, dass Abstände zwischen den Molekülen der Substanz, die sich aktuell in dem fluoreszenten Zustand befinden, in einem interessierenden Bereich der Probe den Mindestwert einhalten, und des Registrierens des Fluoreszenzlichts von den mit dem Anregungslicht angeregten Molekülen der Substanz in dem fluoreszenten Zustand.

Erfindungsgemäß kommt hinzu, dass der Mindestwert der Abstände der einzelnen Moleküle der Substanz in dem interessierenden Bereich der Probe d = λ/(2nsinα √(1 + I/I_{S})) ist, Die Intensitätsverteilung des Anregungslichts weist mindestens ein lokales Minimum auf, wobei die Intensität des Fluoreszenzlichts von einem einzelnen Molekül am Ort des lokalen Minimums der Intensitätsverteilung des Anregungslichts maximal halb so groß ist wie an einem Ort der maximalen Intensität des Anregungslichts in der Probe. Die Position des mindestens einen lokalen Minimums in dem interessierenden Bereich der Probe wird verändert. Das Fluoreszenzlicht von den mit dem Anregungslicht angeregten Molekülen der Substanz in dem fluoreszenten Zustand wird für verschiedene Positionen des mindestens einen lokalen Minimums in der Probe für einen das mindestens eine lokale Minimum umschließenden Registrierungsbereich trennbar von aus anderen Bereichen der Probe emittiertem Fluoreszenzlicht registriert. Dabei sind Abstände zwischen nächstbenachbarten Positionen des mindestens einen lokalen Minimums, in denen das Fluoreszenzlicht von den angeregten einzelnen Molekülen der Substanz registriert wird, nicht größer als der halbe Mindestwert d. D. h. der interessierende Bereich der Probe wird in Schritten mit dem mindestens einen lokalen Minimum abgetastet, die nicht größer als d/2 sind.

Die Orte der einzelnen Moleküle der Substanz werden dann aus dem Verlauf der Intensität des Fluoreszenzlichts aus dem Registrierungsbereich über den Positionen des mindestens einen lokalen Minimums in dem interessierenden Bereich der Probe abgeleitet. Dieses Ableiten der Orte der einzelnen Moleküle aus dem Verlauf der Intensität des Fluoreszenzlichts kann genauso erfolgen, wie bereits oben an Beispielen erläutert wurde. Auch die Einstellung der Intensität des Anregungslichts und der Abstände zwischen nächstbenachbarten Positionen des mindestens einen lokalen Minimums kann so erfolgen, wie oben dargelegt wurde.

Bei dem mindestens einen lokalen Minimum kann es sich insbesondere um ein punktförmiges Minimum handeln, dessen Position in dem interessierenden Bereich der Probe in allen Ausdehnungsrichtungen der Probe verändert wird, d. h. bei einer zweidimensionalen Probe in zwei und bei einer dreidimensionalen Probe in drei Richtungen. Bei einem punktförmigen Minimum können die Orte der einzelnen Moleküle der Substanz in alle Ausdehnungsrichtungen der Probe aus dem Verlauf der Intensität des Fluoreszenzlichts von dem jeweiligen Molekül über den Positionen des mindestens einen lokalen Minimums in dem interessierenden Bereich der Probe abgeleitet werden. Es versteht sich, dass dabei sinnvoller Weise der Verlauf der Intensität des Fluoreszenzlichts über den Positionen des Minimums in allen Ausdehnungsrichtungen der Probe berücksichtigt wird. Entsprechend ist bei einer zwei- oder dreidimensionalen Probe eine zwei- bzw. dreidimensionale Funktion mit einem Minimum an den Verlauf der Intensität des Fluoreszenzlichts anzufitten.

Bei einem punktförmigen Minimum kann das Fluoreszenzlicht aus einem das mindestens eine Minimum umschließenden Registrierungsbereich mit einem konfokal zu dem jeweiligen Minimum angeordneten Punktdetektor registriert werden. Der Registrierungsbereich sollte dabei Abmessungen von mehreren, vorzugsweise mindestens drei Abständen der Positionen des Minimums haben und konzentrisch zu dem Minimum angeordnet sein.

Das mindestens eine Minimum kann sich auch längs einer Linie oder Ebene erstrecken. Dann wird die Position des Minimums in dem interessierenden Bereich der Probe in einer Abtastrichtung quer zu der Linie oder Ebene verändert. Die Orte der einzelnen Moleküle der Substanz werden dabei jeweils in der Abtastrichtung aus dem Verlauf der Intensität des Fluoreszenzlichts von dem jeweiligen Molekül über den Positionen des mindestens einen lokalen Minimums abgeleitet. Um die Orte der einzelnen Moleküle in weiteren Richtungen zu bestimmen, kann die Linie oder Ebene unterschiedlich gegenüber der Probe ausgerichtet und in entsprechend unterschiedliche Abtastrichtungen verschoben werden. Die Orte der einzelnen Moleküle in weiteren Richtungen können aber grundsätzlich auch auf andere Weise, wie beispielsweise durch Lokalisierung, bestimmt werden.

Die Intensitätsverteilung des Anregungslichts kann nicht nur ein, sondern mehrere lokale Minima aufweisen. Die Positionen dieser mehreren Minima werden dann in dem interessierenden Bereich der Probe gemeinsam verändert, wobei das Fluoreszenzlicht von den angeregten einzelnen Molekülen der Substanz für jedes der Minima separat registriert wird. Insbesondere können die Minima in Form eines Gitters angeordnet werden. Bei punktförmigen Minima kann das Gitter zwei- oder dreidimensional sein. Die Abstände zwischen den mehreren Minima müssen in jedem Fall größer als die Beugungsgrenze bei der Wellenlänge des Fluoreszenzlichts sein. Sie sind auch größer als etwaige Registrierungsbereiche zu wählen, aus den das Fluoreszenzlicht zu jedem Minimum registriert wird. Vorzugsweise sind die Abstände zwischen den Minima zudem um ein Mehrfaches größer als die Abstände der Positionen, in die denen die einzelnen Minima in der Probe angeordnet werden, um die zugehörigen Intensitäten des Fluoreszenzlichts zu messen. Vorzugsweise sind die Abstände der Minima mindestens dreimal so groß wie die Abstände der Positionen der Minima in der Probe, in denen das Fluoreszenzlicht gemessen wird.

Das Fluoreszenzlicht von den einzelnen fluoreszenten Molekülen in der Probe kann mit einem gegenüber der Probe ruhenden Lichtsensorarray registriert wird, auf das die Probe abgebildet wird, d. h. mit einer digitalen Kamera, wie beispielsweise einer CCD- oder CMOS-Kamera. Wenn zudem die Abstände der einzelnen Moleküle der Substanz in dem interessierenden Bereich der Probe größer als die Beugungsgrenze bei der Wellenlänge des Fluoreszenzlichts sind, können die Orte der einzelnen Moleküle der Substanz zusätzlich aus der Verteilung des von dem jeweiligen Molekül insgesamt, d. h. unabhängig von der Position des Minimums, registrierten Fluoreszenzlichts über dem Lichtsensorarray durch Lokalisierung bestimmt werden. Damit werden dieselben Photonen des Fluoreszenzlichts, mit denen die Orte der Moleküle abhängig von den Positionen des Minimums in der Probe bestimmt wurden, unter Ausnutzung ihrer Verteilung über das Lichtsensorarray zu einer zweiten Ortsbestimmung der Moleküle verwendet, wobei das Minimum und dessen Verschiebung in der Probe irrelevant ist. Die Ergebnisse der beiden Methoden der Ortsbestimmung können zur Erhöhung der Gesamtgenauigkeit zusammengeführt werden.

Wenn einzelne Abstände der einzelnen Molekülen der Substanz in dem interessierenden Bereich der Probe kleiner als die Beugungsgrenze bei der Wellenlänge des Fluoreszenzlichts sind, so dass das Fluoreszenzlicht den jeweiligen Molekülen nicht völlig getrennt zugeordnet werden kann, können die Orte dieser Moleküle durch komplexere Lokalisierungsalgorithmen bestimmt werden. In diese Algorithmen können die nach den erfindungsgemäßen Verfahren ermittelten Orte als Startwerte eingebracht werden.

Wenn nach dem erfindungsgemäßen Verfahren und durch Lokalisierung unterschiedliche Orte für die einzelnen Moleküle bestimmt werden, können diese hinsichtlich einer festen Orientierung der einzelnen Moleküle in der Probe ausgewertet werden. Dies beruht darauf, dass die Bestimmung der Orte der Moleküle der Substanz in der Probe abhängig von der Verteilung des von ihnen registrierten Fluoreszenzlichts über dem Lichtsensorarray von einer festen Orientierung der Moleküle abhängig ist, nicht aber die Bestimmung der Orte mit Hilfe des verschobenen Minimums.

So kann das erfindungsgemäße Verfahren als Ergänzung zu einem bekannten Verfahren wie PALM, STORM, GSDIM oder dergleichen durchgeführt werden, ohne das bekannte Verfahren zu stören, aber um zusätzliche Ortsinformationen zu den einzelnen Molekülen auf eine andere Weise zu erlangen, auch wenn dieselben registrierten Photonen ausgewertet werden.

Wenn das Fluoreszenzlicht mit einem Lichtsensorarray registriert wird, können fortlaufend Frames aus dem Lichtsensorarray ausgelesen und den jeweiligen Positionen des mindestens einen Minimums in der Probe zugeordnet werden. Dabei können mehrere Frames einer Position aber nicht mehrere Positionen des Minimums einem Frame zugeordnet werden. Dies schließt aber nicht aus, dass das mindestens eine Minimum kontinuierlich in der Probe verschoben wird, wenn die damit eingeführt "Bewegungsunschärfe" klein bleibt.

Eine Vorrichtung, die speziell zur Durchführung bevorzugter Ausführungsformen des erfindungsgemäßen Verfahrens geeignet ist, weist eine Anregungslichtquelle auf, die Anregungslicht abgibt, mit dem Moleküle einer Substanz, die sich in einem fluoreszenten Zustand befinden, zur Emission von Fluoreszenzlicht anregbar sind und mit dem die Moleküle der Substanz aus ihrem fluoreszenten Zustand in einen nichtfluoreszenten Zustand überführbar sind. Darüber hinaus ist eine optische Anordnung vorhanden, die das Anregungslicht auf die Probe richtet. Eine Detektoreinrichtung registriert das Fluoreszenzlicht, das von den mit dem Anregungslicht angeregten Molekülen der Substanz in dem fluoreszenten Zustand emittiert wird. Eine Lichtformungsoptik formt eine Intensitätsverteilung des Anregungslichts in der Probe, die mindestens ein lokales Minimum aufweist, wobei die Intensität des Fluoreszenzlichts von einem einzelnen Molekül am Ort des lokalen Minimums der Intensitätsverteilung des Anregungslichts maximal halb so groß ist wie an einem Ort der maximalen Intensität des Anregungslichts in der Probe. Weiterhin ist eine Rastereinrichtung vorgesehen, mit der das mindestens eine Minimum des Anregungslichts in verschiedenen Positionen in der Probe positionierbar ist. Die Detektoreinrichtung registriert das aus einem beugungsbegrenzten, das mindestens eine Minimum umschließenden Registrierungsbereich emittierte Fluoreszenzlicht trennbar von aus anderen Bereichen der Probe emittiertem Fluoreszenzlicht. Abstände zwischen nächstbenachbarten Positionen des mindestens einen Minimums, in denen die Detektoreinrichtung das Fluoreszenzlicht aus dem Registrierungsbereich registriert, sind dabei nicht größer als λ/(4nsinα √(1 + I/I_{S})). D. h. die Abtasteinrichtung tastet einen interessierenden Bereich einer Probe in Schritten ab, die nicht größer als der halbe Mindestwert d sind.

Vorzugsweise richtet die Lichtformungsoptik das Anregungslicht mit einem Gitter von lokalen Minima auf die Probe, und die Rastereinrichtung verschiebt die Intensitätsverteilung so gegenüber der Probe, dass ein interessierender Bereich der Probe vollständig mit anregungsschwachen Bereichen um die Minima abgetastet wird, innerhalb derer die Substanz nicht zur Emission von Fluoreszenzlicht angeregt wird. Wie ein Gitter von Nullstellen realisiert werden kann, ist in Chmyrov, A. et al: Nanoscopy with more than 100,000 'doughnuts', Nature methods 10 737-740 (2013) beschrieben.

Um das mindestens eine lokale Minimum oder die lokalen Minima bei dreidimensionalen Proben in der z-Richtung der optischen Achse einzugrenzen, kann von der 4Pi-Methode Gebrauch gemacht werden. Dabei können dieselben Maßnahmen zur Formung eines Minimums in z-Richtung ergriffen werden, wie in Schmidt, R. et al.: Spherical nanosized focal spot unravels the interior of cells, Nature Meth. 5, 539-544 (2008) zur Formung der Intensitätsverteilung des STED-Lichts in derselben Richtung. Wenn kohärente Teilstrahlen des Anregungslichts durch zwei einander entgegen gerichteten Objektive in die Probe gerichtet und dort zur Interferenz gebracht werden, können auch dreidimensional Gitter aus lokalen Minima in der Probe ausgebildet werden.

Die Detektoreinrichtung weist vorzugsweise ein gegenüber der Probe ruhendes Bildsensorarray auf, auf das die Probe abgebildet wird. Dies kann durch eine CCD- oder CMOS-Kamera realisiert sein.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen interessierenden Bereich einer Probe mit einer Vielzahl von darin angeordneten Molekülen einer Substanz, mit der eine interessierende Struktur in der Probe markiert ist, wobei sich nur einzelne Moleküle der Substanz in einem fluoreszenten Zustand befinden.
- **Fig. 2**: zeigt für einen interessierenden Bereich der Probe das Abtasten mit einem lokalen Minimum einer Intensitätsverteilung von Anregungslicht, wobei ein einzelnes fluoreszentes Molekül in der Probe dargestellt ist.
- **Fig. 3**: ist eine Auftragung der Intensität des von dem einzelnen fluoreszenten Molekül gemäß Fig. 2 in verschiedenen Positionen des Minimums registrierten Fluoreszenzlichts.
- **Fig. 4**: ist eine Auftragung der Intensität des Fluoreszenzlichts von einem einzelnen fluoreszenten Molekül beim Abtasten der Probe mit dem Minimum gemäß Fig. 2 bei einer deutlich höheren Intensität des Anregungslichts.
- **Fig. 5**: ist eine Auftragung der Intensität des Fluoreszenzlichts von zwei einzelnen fluoreszenten Molekül beim Abtasten der Probe mit dem Minimum gemäß Fig. 2 bei der hohen Intensität des Anregungslichts gemäß Fig. 4.
- **Fig. 6**: ist ein Schnitt durch die Verteilung des von einem fluoreszenten Molekül mit einem Lichtsensorarray insgesamt registrierten Fluoreszenzlichts über dem Lichtsensorarray.
- **Fig. 7**: skizziert das Abtasten eines interessierenden Bereichs einer Probe mit einer linienförmigen Nullstelle aus zwei unterschiedlichen Richtungen.
- **Fig. 8**: skizziert das Abtasten eines interessierenden Bereichs einer Probe mit einem Gitter von punktförmigen Nullstellen.
- **Fig. 9**: ist ein Flussdiagramm einer Ausführungsform des erfindungsgemäßen Verfahrens.
- **Fig. 10**: ist ein Flussdiagramm einer anderen Ausführungsform des erfindungsgemäßen Verfahrens; und
- **Fig. 11**: skizziert eine Vorrichtung zur Durchführung des erfindungsgemäßen Verfahrens.

### FIGURENBESCHREIBUNG

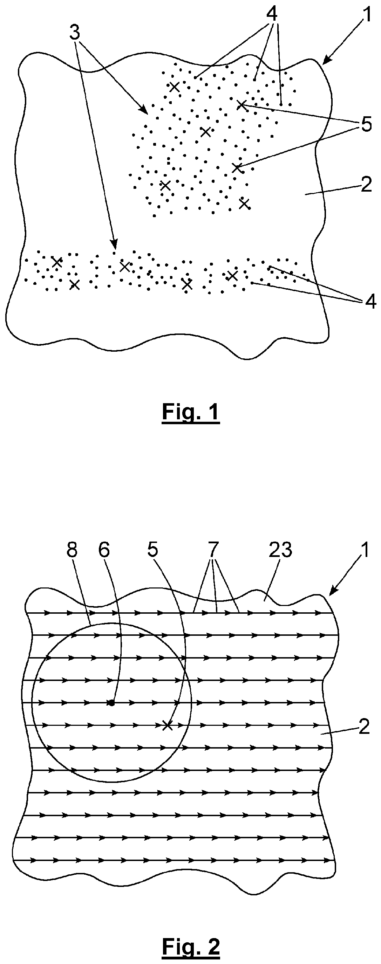

In **Fig. 1** ist ein interessierender Bereich 1 einer Probe 2 gezeigt, in dem eine Struktur 3 mit Molekülen 4 einer Substanz markiert ist, die einen fluoreszenten und einen nichtfluoreszenten Zustand aufweist. Bei Betrachtung aller Moleküle 4, d. h. unabhängig von ihrem Zustand, liegen diese in sehr kleinen Abständen zu ihren nächsten Nachbarn vor, die deutlich kleiner als die Beugungsgrenze bei der Wellenlänge von Fluoreszenzlicht sind, das von den Molekülen 4 erhalten werden kann, wenn sie in ihrem fluoreszenten Zustand mit Anregungslicht angeregt werden. Die Abstände sind auch kleiner als ein Mindestwert d = λ/(2nsinα √(1 + I/I_{S})), wobei λ die Wellenlänge des Anregungslichts ist, n der Brechungsindex des optischen Materials ist, in dem das mindestens eine Minimum ausgebildet wird, α der halbe Öffnungswinkel einer optischen Anordnung ist, mit der das Anregungslicht auf die Probe gerichtet wird, I die maximale Intensität des Anregungslichts in der Probe 2 ist und I_{S} eine von der Substanz abhängige Fluoreszenzanregungssättigungsintensität des Anregungslichts ist. Dieser Mindestwert d entspricht der Genauigkeit bei der räumlichen Abbildung, wie sie bei der hoch auflösenden STED-, GSD- und RESOLFT-Rasterfluoreszenzlichtmikroskopie erreicht wird.

Es sind jedoch nur einzelne Moleküle 5, die jeweils mit einem "x" markiert sind, in dem fluoreszenten Zustand, während die anderen Moleküle, die hier nur durch Punkte wiedergegeben sind, in dem nichtfluoreszenten Zustand sind und daher von dem Anregungslicht nicht zur Emission von Fluoreszenzlicht veranlasst werden. Die einzelnen fluoreszenten Moleküle 5 weisen Abstände in dem interessierenden Bereich 1 auf, die den Mindestwert d einhalten und vorzugsweise auch die Beugungsgrenze bei der Wellenlänge des Fluoreszenzlichts. Letzteres ermöglicht es, das von den einzelnen Molekülen 5 emittierte Fluoreszenzlicht getrennt, d. h. jeweils unter Zuordnung zu einem bestimmten einzelnen Molekül 5, zu registrieren. Das Einstellen eines entsprechenden kleinen Anteils der Moleküle 4 in den fluoreszenten Zustand 5 kann auf unterschiedlich Weise erfolgen, wie sie von den unter den Stichworten PALM, STORM und GSDIM bekannten Verfahren geläufig sind.

**Fig. 2** illustriert, wie der jeweils interessierende Bereich 1 der Probe 2 mit Anregungslicht 23 beaufschlagt und dabei mit einem lokalen Minimum 6 der Intensitätsverteilung des Anregungslichts 23 in durch Pfeile angedeuteten Schritten abgetastet wird. Dabei sind diese Schritte und die resultierenden Abstände 7 nächstbenachbarter Positionen des Minimums 6 in der Probe 2 nicht größer als die halbe Beugungsgrenze bei der Wellenlänge des Anregungslichts und des damit angeregten Fluoreszenzlichts von den einzelnen Molekülen 5. Von diesen ist hier in Fig. 2 nur ein einziges durch ein "x" wiedergegeben. In einem Bereich 8 um das Minimum 6 hängt die Intensität des Fluoreszenzlichts von dem jeweiligen einzelnen Molekül 5 von seinem Abstand zu dem Minimum 6 ab. Außerhalb des Bereichs 8 möge sie hier gesättigt sein. Das heißt, die Intensität des Anregungslichts 23 ist außerhalb des Bereichs 8 so groß, dass eine maximale Intensität des Fluoreszenzlichts von den einzelnen Molekülen 5 erhalten wird.

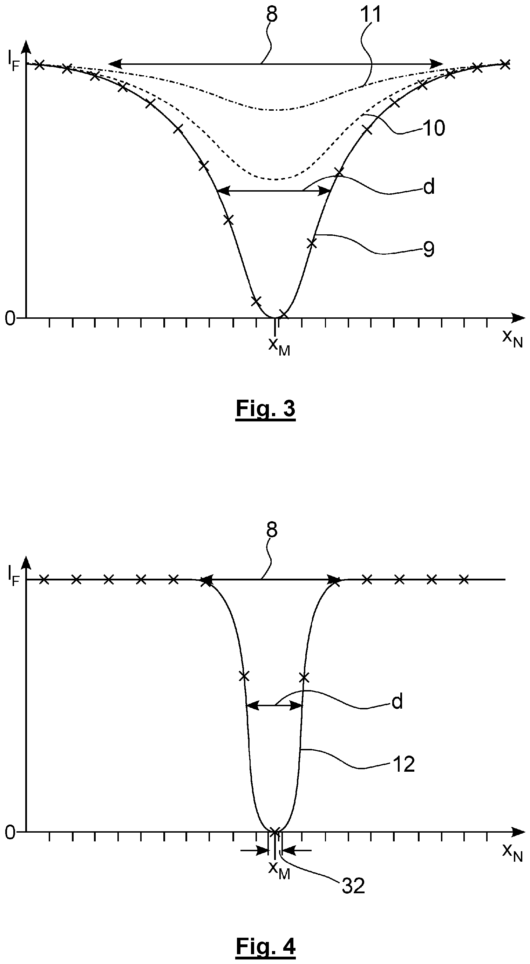

**Fig. 3** zeigt die Intensität I_{F} des Fluoreszenzlichts von einem einzelnen Molekül 5, das mit dem punktförmigen Minimum 6 gemäß Fig. 2 überfahren wird, wobei das Molekül 5 gemäß Fig. 2 zwar genau überfahren wird, aber dabei nicht genau mit einer der Positionen x_{N} des Minimums 6 getroffen wird, an der die Intensität I_{F} des Fluoreszenzlichts gemessen wird. Dabei sind in Fig. 3 mit jeweils einem "x" die registrierten Intensitäten I_{F} des Fluoreszenzlichts über den verschiedenen Positionen x_{N} des Minimums 6 in der Probe 2 aufgetragen. Bei dem Minimum 6 handelt es sich hier um eine Nullstelle der Intensität des Anregungslichts 23 und entsprechend auch der Intensität I_{F} des Fluoreszenzlichts. Zumindest geht die Intensität I_{F} des Fluoreszenzlichts in dem Minimum auf 50 % der Intensität I_{F} des Fluoreszenzlichts außerhalb des Bereichs 8 zurück. Wenn an den Verlauf der zu den Positionen x_{N} registrierten Intensitäten I_{F} eine Funktion 9 mit einem lokalen Minimum angefittet wird, ist aus der Position des Minimums der Ort x_{M} des Moleküls in der Probe ableitbar, und dies mit einer höheren räumlichen Genauigkeit als dem Abstand der Positionen x_{N}. Der Abstand der Positionen x_{N} ist nicht größer, hier sogar kleiner als die Hälfte des Mindestwerts d. Der Mindestwert d entspricht der Halbwertsbreite des von dem Minimum 6 beeinflussten Verlaufs der Intensität I_{F}.

Die Funktion 9 mit dem lokalen Minimum kann an den erwarteten Verlauf der Intensität I_{F} beim Überfahren des Moleküls 5 mit dem Minimum 6 gemäß Fig. 2 adaptiert sein. Mit gestrichelter Linie 10 ist in Fig. 3 ein entsprechender Verlauf der Intensität I_{F} des Fluoreszenzlichts aufgetragen, wenn das Minimum 6 gemäß Fig. 2 das Molekül 5 um eine Zeile verfehlt. Eine strichpunktierte Linie 11 zeigt die Intensität I_{F} beim Verfehlen des Moleküls um zwei Zeilen an. Aus den entsprechenden tatsächlichen Messwerten der Intensität I_{F} des Fluoreszenzlichts kann der Ort des Moleküls auch in der zur x-Richtung senkrechten y-Richtung ermittelt werden.

**Fig. 4** zeigt den Verlauf 12 der Intensität I_{F} des Fluoreszenzlichts über den verschiedenen Positionen x_{N} des Minimums 6 gemäß Fig. 2 in Form einer Nullstelle für eine deutlich höhere absolute Intensität des Anregungslichts 23 außerhalb des Minimums 6. Hier wird außerhalb eines anregungsschwachen Bereichs 32 unmittelbar um das Minimum 6 herum sehr schnell eine Sättigung der Intensität I_{F} des Fluoreszenzlichts erreicht, das von dem jeweiligen fluoreszenten Molekül 5 emittiert wird. Unter diesen Randbedingungen kann die Position x_{N} des Minimums 6, an der die Intensität I_{F} des Fluoreszenzlichts von null registriert wird, dem Ort des Moleküls x_{M} gleichgesetzt werden, soweit an diese ausgezeichnete Position x_{N} andere Positionen x_{N} des Minimums 6 angrenzen, in denen Fluoreszenzlicht von dem jeweiligen fluoreszenten Molekül 5 registriert wird.

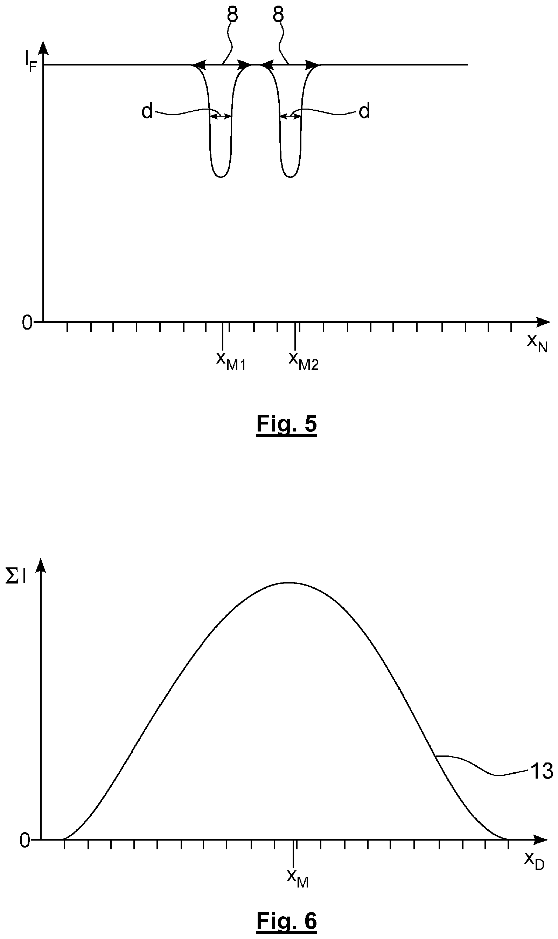

**Fig. 5** zeigt den Verlauf der Intensität I_{F} des Fluoreszenzlichts über der Position x_{N} des Minimums in der Probe im Falle zweier Moleküle 5 in dem fluoreszentem Zustand, die in sehr dichtem Abstand in der Probe 2 zusammenliegen. Dieser dichte Abstand liegt deutlich unter der Beugungsgrenze bei der Wellenlänge des Fluoreszenzlichts. Daher kann hier die Intensität I_{F} nicht mit einem Lichtsensorarray, auf das die Probe 2 abgebildet wird, den einzelnen Molekülen 5 getrennt zugeordnet werden. Der Einbruch der Intensität I_{F} des Fluoreszenzlichts über der Position x_{N} des Minimums tritt jedoch für die beiden Moleküle bei auf den Mindestabstand der Moleküle abgestimmter Intensität des Anregungslichts 23 getrennt auf, weil sich mit der Intensität des Anregungslichts die Abmessungen des Bereichs 8 und auch des Mindestwerts d, der der Halbwertsbreite der Intensität I_{F} im Bereich des Minimums entspricht, reduzieren. Wenn der Abstand der Moleküle 5 mindestens so groß ist wie der oben definierte Mindestwert d, steigt die Intensität I_{F} des Fluoreszenzlichts bei einer Position des Minimums 6 zwischen den Molekülen 5 wieder an, so dass die einzelnen Einbrüche der Intensität I_{F} den einzelnen Molekülen zugeordnet werden können.

In Fig. 5 ist ein Fall gezeigt, in dem die Intensität I_{F} des Fluoreszenzlichts auch von einem fluoreszenten Molekül 5, das voll von dem Minimum 6 getroffen wird, nicht auf Null zurückgeht, weil es sich hier bei dem Minimum 6 nicht um eine Nullstelle handelt. Vielmehr geht die Intensität I_{F}, wenn eines der Moleküle 5 in den Bereich des Minimums 6 gelangt, nur um etwa 90 % ihres Maximalwerts zurück. Zumindest solange der Einbruch der Intensität I_{F} bei mindestens 50 % bleibt, beeinträchtigt dies die Bestimmung der Orte x_{M1} und x_{M2} der einzelnen Moleküle 5 aus dem Verlauf der Intensität I_{F} jedoch nicht.

**Fig. 6** zeigt die über die einzelnen Positionen x_{N} aufsummierte Intensität ∑I des Fluoreszenzlichts von einem einzelnen Molekül 5 in einem Schnitt durch die Verteilung der aufsummierte Intensität ∑I über einem Lichtsensorarray, auf das die Probe abgebildet wird und mit dem das Fluoreszenzlicht registriert wird. Während es für die bislang in den Fig. 3 und 4 skizzierte Auswertung nur darauf ankam, welche Intensität I des Fluoreszenzlichts von dem einzelnen fluoreszenten Molekül 5 für welche Position x_{N} des Minimums 6 registriert wird, aber nicht, wo dieses Fluoreszenzlicht, solange es dem einzelnen fluoreszenten Molekül 5 zugeordnet werden kann, registriert wird, wird gemäß Fig. 6 die Verteilung 13 des für das einzelne fluoreszente Molekül 5 insgesamt registrierten Fluoreszenzlichts über das Lichtsensorarray ausgewertet. Aus deren Schwerpunkt kann ebenfalls der Ort des Moleküls in der Probe bestimmt werden, und zwar unabhängig von der Position des Minimums 6 und auf eine Weise, die als Lokalisierung bekannt ist. Dabei hängt der scheinbare Ort x'_{M} des Moleküls 5 in der Probe 2 jedoch von einer etwaigen festen Orientierung und einem entsprechend immer ähnlich ausgerichteten elektrischen Dipolmoment des Moleküls in der Probe 2 ab, das zu einer räumlich gerichteten Verteilung des emittierten Fluoreszenzlichts führt (siehe Engelhardt, J. et al., Molecular orientation affects localization accuracy in superresolution far-field fluorescence microscopy, Nano Lett. 2011 Jan 12;11(1):209-13). Dies ist bei den anhand der Fig. 3 und 4 erläuterten Verfahren der Ortsbestimmung nicht der Fall.

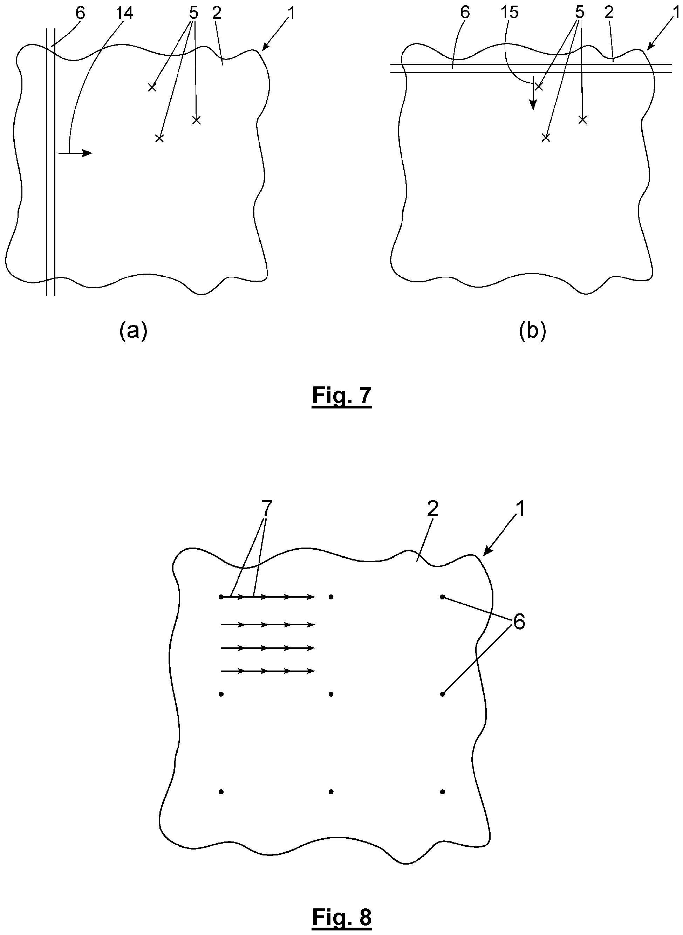

In Fig. 2 wurde ein punktförmiges Minimum 6 illustriert. Mit diesem kann beim einmaligen Abtasten der Probe - einer zweidimensionalen Probe in zwei Richtungen, einer dreidimensionalen Probe in drei Richtungen - die Position jedes einzelnen fluoreszenten Moleküls bestimmt werden. Wenn gemäß **Fig. 7** ein linienförmiges Minimum oder ein Minimum in Form einer (senkrecht zur Zeichenebene ausgerichteten) Ebene verwendet wird, ist die Probe quer zum Verlauf des Minimums mit dem Minimum abzutasten, um ihre Position in der jeweiligen Abtastrichtung 14, 15 zu bestimmen. Entsprechend muss eine zweidimensionale Probe, wie in Fig. 7 (a) und (b) dargestellt, in wenigstens zwei, vorzugsweise orthogonalen, Abtastrichtungen 14, 15 abgetastet werden, um die Orte der einzelnen Moleküle vollständig zu bestimmen. Dabei können sich auch gleichzeitig mehrere fluoreszente Moleküle 5 im Bereich eines Minimums in Form einer Linie oder Ebene befinden, solange das von ihnen jeweils emittierte Fluoreszenzlicht getrennt werden kann.

Das Anregungslicht 23 muss auch nicht die gesamte Probe 2 und auch nicht den gesamten interessierenden Bereich 1 der Probe 2 außerhalb des Minimums 6 mit einer solchen Intensität beaufschlagen, dass immer Fluoreszenzlicht von den einzelnen Molekülen 5 registriert werden kann, soweit sie sich nicht genau in dem anregungsschwachen Bereich 32 um das Minimum 6 befinden. Vielmehr kann sich die Intensität des Anregungslichts 23 auf einen Bereich um das Minimum 6 herum konzentrieren. Dabei kann dieser Bereich mit einem weiteren Minimum enden, hinter der die Intensität des Anregungslichts 23 erneut ansteigt, oder auslaufen. Während im ersten Fall auch das weitere Minimum zur Ermittlung des Orts der einzelnen Moleküle 5 verwendet werden kann, wird im zweiten Fall die Variation der Intensität I_{F} des Fluoreszenzlichts von einem fluoreszenten Molekül 5 über eine größere Anzahl von Positionen x_{N} des Minimums 6 in der Probe 2 erkannt und kann so bei der Bestimmung des Ortes x_{M} des jeweiligen fluoreszenten Moleküls 5 unberücksichtigt bleiben.

**Fig. 8** illustriert, wie mit einem Gitter aus punktförmigen lokalen Minima 6 der interessierende Bereich 1 der Probe 2 mit viel weniger Schritten abgescannt werden kann als mit nur einem Minimum 6 gemäß Fig. 2. Dabei sind für das Abtasten fast des ganzen dargestellten interessierenden Bereichs 1 auch nur vier Minima ausreichend, mit denen jeweils 20 Positionen in der Ebene angefahren werden. Ein solches Muster von Minima, wie in Fig. 8 gezeigt, kann grundsätzlich durch Überlagerung von orthogonal zueinander ausgerichteten linienförmigen Gittern realisiert werden, die durch Überlagerung von kohärenten Teilstrahlen erzeugt werden (siehe Chmyrov, A. et al: Nanoscopy with more than 100,000 'doughnuts', Nature methods 10 737-740 (2013)).

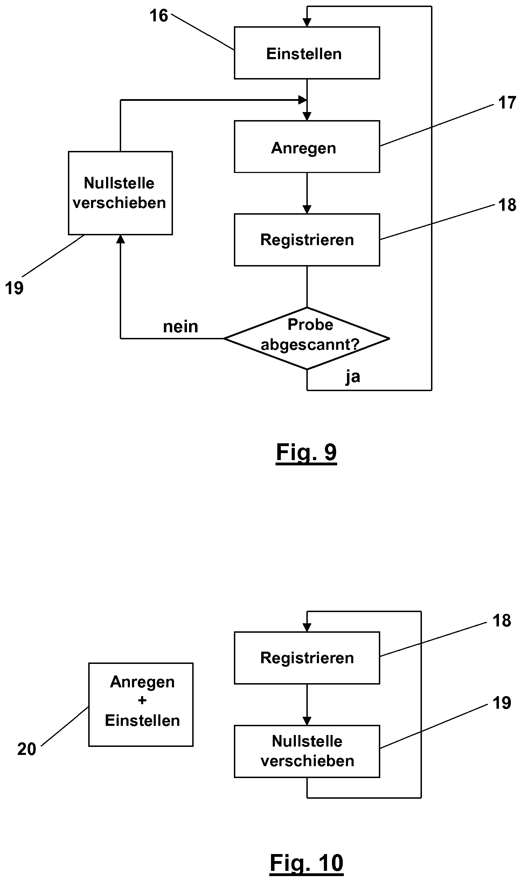

**Fig. 9** illustriert den grundsätzlichen Ablauf eines erfindungsgemäßen Verfahrens. In einem Schritt 16 wird der Anteil der insgesamt vorhandenen Moleküle 4 der Substanz eingestellt, die sich als einzelne Moleküle 5 in dem fluoreszenten Zustand befinden. In einem Schritt 17 werden die in dem fluoreszenten Zustand befindlichen Moleküle 5 mit der Intensitätsverteilung des Anregungslichts 23, die das mindestens eine lokale Minimum 6 aufweist, zur Emission von Fluoreszenzlicht angeregt. Dieses Fluoreszenzlicht wird in einem Schritt 18 unter Zuordnung zu der aktuellen Position des Minimums 6 in der Probe 2 registriert. Dann wird das Minimum 6 in einem Schritt 19 um einen kleinen Abstand zu seiner letzten Position von nicht mehr als d/2 verschoben. Anschließend wird erneut angeregt 17 und registriert 18, bis die gesamte Probe abgescannt ist. Dann wird ein neuer Anteil der Moleküle 4 der Substanz in den fluoreszenten Zustand überführt, d. h. bei Wiederholung des Schrittes 16 andere einzelne Moleküle 5 zufällig ausgewählt, woran sich dann Wiederholungen der Schleife aus den Schritten 17 bis 19 anschließen. Die in Fig. 9 skizzierten Schritte 16 bis 19 werden solange durchgeführt, bis mit ihrer Hilfe die Orte so vieler einzelner Moleküle 5 in der Probe 2 bestimmt wurden, dass sie die Verteilung der Gesamtheit der Moleküle 4 in der Probe 2 mit der gewünschten Genauigkeit wiedergeben. Dazu müssen nicht die Positionen aller Moleküle 4 in der Probe 2 bestimmt werden. Vielmehr reicht es aus, den Ort einer ausreichenden Anzahl von Repräsentanten der Moleküle 4 in Form der einzelnen Moleküle 5 zu bestimmen.

Wenn das Fluoreszenzlicht bei dem in Fig. 9 skizzierten Verfahren im Schritt 18 mit einem Lichtsensorarray registriert wird, auf das die Probe 2 abgebildet wird, kann die zu jedem einzelnen fluoreszenten Molekül 5 registrierte Verteilung 13 des gesamten Fluoreszenzlichts über dem Lichtsensorarray auch dazu genutzt werden, seine Position durch Lokalisierung zu bestimmen (siehe Fig. 6).

Bei dem erfindungsgemäßen Verfahren können die in Fig. 9 separat gezeigten Schritte 16 bis 19 auch stark zusammengefasst werden. Dies ist in **Fig. 10** skizziert. Hier wird in einem Schritt 20 mit Anregungslicht, das zugleich als Einstelllicht dient, dafür gesorgt, dass die einzelnen Moleküle 5, die in dem fluoreszenten Zustand verbleiben, einen ausreichend großen Abstand untereinander aufweisen, um das Fluoreszenzlicht von ihnen separat zu registrieren, und diese einzelnen Moleküle 5 werden zumindest außerhalb des mindestens einen Minimums 6 der Verteilung des Anregungslichts 23 zur Emission von Fluoreszenzlicht angeregt.

Parallel dazu läuft eine Schleife aus den Schritten des Registrierens 18 des Fluoreszenzlichts von den einzelnen fluoreszenten Molekülen 5 in der Probe 2 und des Verschiebens 19 des Minimums 6 ab. Dabei kann das Verschieben sogar kontinuierlich erfolgen, wenn die daraus resultierende Bewegung des Minimums 6 in der Probe 2 innerhalb jedes Zeitintervalls, für das die Intensität I_{F} des Fluoreszenzlichts registriert wird, verglichen mit der angestrebten Genauigkeit bei der Bestimmung der Orte der Moleküle 5 klein bleibt.

Dass dieses Verfahren durchführbar ist, war auch angesichts dessen, was zur GSD-Mikroskopie mit nur einer Wellenlänge, siehe DE 10 2005 034 443 A1, und zur GSDIM bekannt war, überraschend. Das erfindungsgemäße Verfahren setzt nämlich voraus, dass die in den Bereich des Minimums 6 des Anregungslichts 23 gelangenden Moleküle 4 aufgrund der dort abnehmenden Intensität des Anregungslichts 23 nicht sofort in ihren fluoreszenten Zustand zurückgelangen, sondern dass die mit der Intensität des Anregungslichts 23 eingestellte Verteilung der einzelnen Moleküle 5, die in ihrem fluoreszenten Zustand verbleiben, für ausreichend lange Zeit erhalten bleibt, um den interessierenden Bereich 1 der Probe 2 mit dem Minimum 6 abzutasten. Zumindest für lokale Minima 6 mit kleinem Bereich 8 und entsprechend noch kleinerer Halbwertbreite d und bei verglichen mit der Verweildauer eines einzelnen Moleküls 5 in seinem fluoreszenten Zustand rascher Bewegung der Minima 6 in der Probe 2 hat aber die reduzierte Intensität des Anregungslichts 23 in den Minima 6 auf die Verteilung der Moleküle 4 der Substanz auf ihren fluoreszenten Zustand und ihren nichtfluoreszenten Zustand keinen starken Einfluss. So können die Orte der einzelnen Moleküle 5 während deren Verweildauer in dem fluoreszenten Zustand bestimmt werden und diese Bestimmung wird nicht durch im Bereich der Minima in den fluoreszenten Zustand zurückdrängende Moleküle 4 verhindert. Ggf. sind die Übergangswahrscheinlichkeiten zwischen dem fluoreszenten und dem nichtfluoreszenten Zustand der Moleküle 4, wie sie insbesondere durch die Intensität des Anregungslichts 23 festgelegt werden, für das erfindungsgemäße Verfahren passend einzustellen. Zu diesem Zweck können/kann zum Beispiel geeignete Chemikalien der Probe 2 zugesetzt und/oder die Sauerstoffkonzentration in der Probe 2 geeignet eingestellt werden. Hilfreich können auch Minima 6 mit nur kleinem anregungsschwachem Bereichen 32 sein, die vergleichsweise schnell zwischen ihren einzelnen Positionen in der Probe 2 verfahren werden.

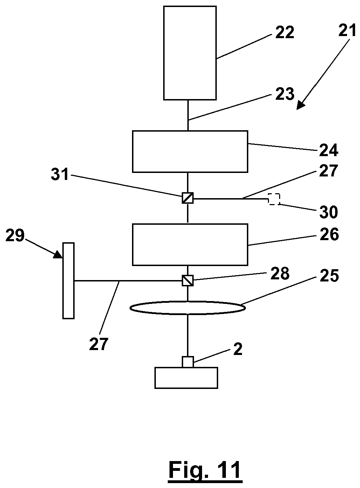

**Fig. 11** skizziert eine Vorrichtung 21 zur Durchführung des erfindungsgemäßen Verfahrens. Sie weist eine Anregungslichtquelle 22 auf, die das Anregungslicht 23 abgibt. Von einer Lichtformungsoptik 24 wird das Anregungslicht 23 so geformt, dass es nach Fokussieren mit einem Objektiv 25 in die Probe 2 die gewünschte Intensitätsverteilung mit dem mindestens einen Minimum 6 aufweist. Um das Minimum 6 in Schrittweiten von maximal d/2 innerhalb der Probe 2 zu verschieben, ist eine Abtasteinrichtung 26 vorgesehen. Das von der Probe 2 kommende Fluoreszenzlicht 27 wird mit einem Strahlteiler 28 zu einem Lichtsensorarray 29 hin ausgekoppelt, auf das die Probe 2 von dem Objektiv 25 abgebildet wird. Das Lichtsensorarray 29 ermöglicht es, die von der Probe 2 registrierte Intensität des Fluoreszenzlichts 27 auch im Sinne einer Lokalisierung der einzelnen Moleküle 5 in der Probe 2 auszuwerten. Für die Bestimmung des Ortes der einzelnen Moleküle 5 in der Probe 2 gemäß der vorliegenden Erfindung reicht hingegen auch ein hier mit gestrichelter Linie dargestellter Punktdetektor 30 aus, zu dem hin das Fluoreszenzlicht 27 - von der Probe 2 aus gesehen hinter der Abtasteinrichtung 26 - mit einem weiteren Strahlteiler 31 ausgekoppelt wird und der das Fluoreszenzlicht aus einem das Minimum 6 umschließenden Registrierungsbereich registriert. Die Abtasteinrichtung 26 ist so ausgebildet, dass sie die Positionen des Minimums 6 des Anregungslichts 2, zu denen das Fluoreszenzlicht 27 von der Probe 2 registriert wird, mindestens so dicht setzt, dass ihre Abstände 7 nicht größer als die Beugungsgrenze bei der Wellenlänge des Anregungslichts 23 und des Fluoreszenzlichts 27 sind.

### BEZUGSZEICHENLISTE

- 1: interessierender Bereich
- 2: Probe
- 3: interessierende Struktur
- 4: Molekül
- 5: einzelnes Molekül im fluoreszenten Zustand
- 6: Minimum
- 7: Abstand
- 8: Bereich
- 9: Verlauf
- 10: Verlauf
- 11: Verlauf
- 12: Verlauf
- 13: Verteilung
- 14: Abtastrichtung
- 15: Abtastrichtung
- 16: Schritt
- 17: Schritt
- 18: Schritt
- 19: Schritt
- 20: Schritt
- 21: Vorrichtung
- 22: Anregungslichtquelle
- 23: Anregungslicht
- 24: Lichtformungsoptik
- 25: Objektiv
- 26: Abtasteinrichtung
- 27: Fluoreszenzlicht
- 28: Strahlteiler
- 29: Lichtsensorarray
- 30: Punktsensor
- 31: Strahlteiler
- 32: Anregungsschwacher Bereich
- x_{N}: Position des Minimums in x-Richtung
- x_{M}: Ort eines einzelnen Moleküls in x-Richtung
- I_{F}: Intensität des Fluoreszenzlichts von einem einzelnen Molekül
- ∑I: Summe der Intensitäten des Fluoreszenzlichts von einem einzelnen Molekül

## Patentansprüche

1. Verfahren zur Bestimmung der Orte x_{M} einzelner Moleküle (5) einer Substanz in einer Probe (2),
- wobei sich die einzelnen Moleküle (5) der Substanz in einem fluoreszenten Zustand befinden, in dem sie mit Anregungslicht (23) zur Emission von Fluoreszenzlicht (27) anregbar sind,
- wobei Abstände der einzelnen Moleküle (5) der Substanz in einem interessierenden Bereich (1) der Probe (2) einen Mindestwert einhalten, und
- wobei das Verfahren die Schritte aufweist:
- Anregen der einzelnen Moleküle (5) der Substanz mit dem Anregungslicht (23) zur Emission von Fluoreszenzlicht (27), wobei eine Intensitätsverteilung des Anregungslichts (23) mindestens ein lokales Minimum (6) aufweist, und
- Registrieren des Fluoreszenzlichts (27) von den angeregten einzelnen Molekülen (5) der Substanz für verschiedene Positionen x_{N} des mindestens einen Minimums (6) in dem interessierenden Bereich (1) der Probe (2),
**dadurch gekennzeichnet,**
- **dass** der Mindestwert der Abstände der einzelnen Moleküle (5) der Substanz in dem interessierenden Bereich (1) der Probe (2) d = λ/(2nsinα √(1 + I/I_{S})), wobei
- λ die Wellenlänge des Anregungslichts ist,
- n der Brechungsindex des optischen Materials ist, in dem das mindestens eine Minimum ausgebildet wird,
- α der halbe Öffnungswinkel einer optischen Anordnung ist, mit der das Anregungslicht auf die Probe gerichtet wird,
- I die maximale Intensität des Anregungslichts (23) in der Probe (2) ist und
- I_{S} eine von der Substanz abhängige Fluoreszenzanregungssättigungsintensität des Anregungslichts ist,
- wobei die maximale Intensität I des Anregungslichts (23) in der Probe (2) größer als die Fluoreszenzanregungssättigungsintensität I_{S} ist,
- **dass** die Intensität des Fluoreszenzlichts (27) von einem einzelnen Molekül (5) am Ort des lokalen Minimums (6) der Intensitätsverteilung des Anregungslichts (23) maximal halb so groß ist wie an einem Ort der maximalen Intensität des Anregungslichts (23) in der Probe (2),
- **dass** Abstände (7) zwischen nächst benachbarten Positionen x_{N} des mindestens einen Minimums (6), in denen das Fluoreszenzlicht (27) von den angeregten einzelnen Molekülen (5) der Substanz registriert wird, nicht größer als der halbe Mindestwert d sind,
- wobei der Mindestwert d einer Halbwertsbreite eines von dem mindestens einen Minimum (6) beeinflussten Verlaufs der Intensität I_{F} des Fluoreszenzlichts (27) von dem einzelnen Molekül (5) über den Positionen x_{N} des lokalen Minimums (6) entspricht, in denen das Fluoreszenzlicht (27) registriert wird,
- **dass** die Orte x_{M} der einzelnen Moleküle (5) der Substanz aus dem Verlauf der Intensität I_{F} des Fluoreszenzlichts (27) von dem jeweiligen Molekül (5) über den Positionen x_{N} des mindestens einen Minimums (6) in dem interessierenden Bereich (1) der Probe (2) abgeleitet werden, indem eine Funktion (9) mit lokalem Minimum an den Verlauf der Intensität I_{F} des Fluoreszenzlichts (27) von dem jeweiligen Molekül (5) über den Positionen x_{N} des mindestens einen Minimums (6) angefittet wird und der Ort x_{M} des jeweiligen Moleküls (5) der Position des lokalen Minimums der angefitteten Funktion (9) gleichgesetzt wird oder indem der Ort x_{M} des jeweiligen Moleküls (5) einer Position x_{N} des mindestens einen Minimums (6) gleichgesetzt wird, die sich dadurch auszeichnet, dass von dem jeweiligen Molekül (5) weniger Fluoreszenzlicht (27) registriert wird als in in verschiedenen Richtungen nächst benachbarten Positionen x_{N} des Minimums (6).

2. Verfahren nach Anspruch 1, **dadurch gekennzeichnet, dass** die Funktion (9) mit lokalem Minimum, die an den Verlauf der Intensität I_{F} des Fluoreszenzlichts (27) von dem jeweiligen Molekül (5) über den Positionen x_{N} des mindestens einen Minimums (6) angefittet wird, eine quadratische Funktion ist.

3. Verfahren nach einem der vorhergehenden Ansprüche, **dadurch gekennzeichnet, dass** der Abstand (7) zwischen nächst benachbarten Positionen x_{N} des mindestens einen Minimums (6), in denen das Fluoreszenzlichts (27) von den angeregten einzelnen Molekülen (5) der Substanz registriert wird, nicht größer als ein anregungsschwacher Bereich (32) um das Minimum (6) ist, in dem das jeweilige Molekül (5) nur zur Emission von Fluoreszenzlicht (27) mit einer Minimalintensität angeregt wird.

4. Verfahren nach einem der vorhergehenden Ansprüche, **dadurch gekennzeichnet,**
- **dass** die Moleküle (4) der Substanz mit einem Einstellsignal mit einer mit der Intensität des Einstellsignals ansteigenden Übergangswahrscheinlichkeit
- aus ihrem fluoreszenten Zustand in einen nicht fluoreszenten Zustand oder
- aus einem nicht fluoreszenten Zustand in ihren fluoreszenten Zustand überführbar sind,
- **dass** bei Betrachtung aller Moleküle (4) unabhängig von ihrem Zustand Abstände zwischen nächst benachbarten Molekülen (4) der Substanz in dem interessierenden Bereich (1) der Probe (2) kleiner als der Mindestwert d sind und
- **dass** die Abstände zwischen den einzelnen Molekülen (5) der Substanz in dem fluoreszenten Zustand mit dem Einstellsignal eingestellt werden.

5. Verfahren nach Anspruch 4, **dadurch gekennzeichnet,**
- **dass** die Moleküle (4) der Substanz entgegen der Richtung ihrer Überführung mit dem Einstellsignal
- unter Einwirkung eines Rückführsignals und/oder
- spontan
mit einer weiteren Übergangswahrscheinlichkeit in ihren ursprünglichen Zustand zurückkehren,
- **dass** wiederholt oder fortlaufend für jeweils andere einzelne Moleküle (5) in dem fluoreszenten Zustand die Abstände mit dem Mindestwert d mit dem Einstellsignal und ggf. dem Rückführsignal eingestellt werden und
- **dass** jeweils die Positionen der einzelnen Moleküle (5) in dem fluoreszenten Zustand bestimmt werden, um ein Abbild der Verteilung der Moleküle (4) der Substanz in der Probe (2) zu erhalten.

6. Verfahren nach einem der Ansprüche 4 oder 5, **dadurch gekennzeichnet,**
- **dass** das Einstellsignal Einstelllicht ist,
- wobei die Moleküle (4) der Substanz mit dem Einstelllicht optional aus ihrem fluoreszenten Zustand in ihren nicht fluoreszenten Zustand überführt werden, wobei der nicht fluoreszente Zustand der Moleküle (4) der Substanz optional ein elektronischer Energiezustand ist und/oder das Einstelllicht optional dieselbe Wellenlänge aufweist wie das Anregungslicht (23).

7. Verfahren nach einem der vorhergehenden Ansprüche, **dadurch gekennzeichnet, dass** das mindestens eine Minimum (6) eine punktförmiges Minimum ist, dessen Position in dem interessierenden Bereich (1) der Probe (2) in allen Ausdehnungsrichtungen der Probe (2) verändert wird, und dass die Orte x_{M} der einzelnen Moleküle (5) der Substanz in allen Ausdehnungsrichtungen der Probe (2) aus dem Verlauf der Intensität I_{F} des Fluoreszenzlichts (27) von dem jeweiligen Molekül (5) über den Positionen x_{N} des mindestens einen Minimums (6) in dem interessierenden Bereich (1) der Probe (2) abgeleitet werden, wobei das Fluoreszenzlicht (27) optional aus einem das mindestens eine Minimum (6) umschließenden Registrierungsbereich mit einem konfokal zu dem Minimum (6) angeordneten Punktdetektor (30) registriert wird.

8. Verfahren nach einem der Ansprüche 1 bis 6, **dadurch gekennzeichnet, dass** sich das mindestens eine Minimum (6) längs einer Linie oder Ebene erstreckt, dass ihre Position x_{N} in dem interessierenden Bereich (1) der Probe (2) in einer Abtastrichtung (14, 15) quer zu der Linie oder Ebene verändert wird und dass die Orte x_{M} der einzelnen Moleküle (5) der Substanz in der Abtastrichtung (14, 15) aus dem Verlauf der Intensität I_{F} des Fluoreszenzlichts (27) von dem jeweiligen Molekül (5) über den Positionen x_{N} des mindestens einen Minimums (6) in dem interessierenden Bereich (1) der Probe (2) abgeleitet werden, wobei die Linie oder Ebene optional unterschiedlich gegenüber der Probe (2) ausgerichtet wird, um die Orte x_{M} der einzelnen Moleküle (5) der Substanz in unterschiedlichen Raumrichtungen zu bestimmen.

9. Verfahren nach einem der vorhergehenden Ansprüche, **dadurch gekennzeichnet, dass** die Intensitätsverteilung des Anregungslichts mehrere Minima (6) aufweist, deren Positionen in dem interessierenden Bereich (1) der Probe (2) gemeinsam verändert werden, wobei das Fluoreszenzlicht (27) von den angeregten einzelnen Molekülen (5) der Substanz für jedes der Minima (6) separat registriert wird.

10. Verfahren nach einem der vorhergehenden Ansprüche, **dadurch gekennzeichnet,**
- **dass** das Fluoreszenzlicht (27) mit einem gegenüber der Probe (2) ruhenden Lichtsensorarray (29) registriert wird,
- wobei optional fortlaufend Frames aus dem Lichtsensorarray (29) ausgelesen und den jeweiligen Positionen des mindestens einen Minimums (6) in der Probe (2) zugeordnet werden, wobei das mindestens eine Minimum (6) optional kontinuierlich in der Probe (2) verschoben wird.

11. Verfahren nach Anspruch 10, **dadurch gekennzeichnet, dass** die Abstände der einzelnen Molekülen (5) der Substanz in dem interessierenden Bereich (1) der Probe (2) größer als die Beugungsgrenze bei der Wellenlänge des Fluoreszenzlichts (27) sind und dass die Orte x_{M} der einzelnen Moleküle (5) der Substanz in dem fluoreszenten Zustand zusätzlich aus der Verteilung (13) des von dem jeweiligen Molekül (5) insgesamt registrierten Fluoreszenzlichts (27) über dem Lichtsensorarray (29) bestimmt werden.

## Claims

1. Method of determining the locations x_{M} of individual molecules (5) of a substance in a sample (2),
- wherein the individual molecules (5) of the substance are in a fluorescent state in which they are excitable for emission of fluorescence light (27) by excitation light (23),
- wherein distances of the individual molecules (5) of the substance keep a minimum value in a area (1) of interest of the sample (2), and
- wherein the method comprising the steps:
- exciting the individual molecules (5) of the substance for emission of fluorescence light (27) by the excitation light (23), wherein an intensity distribution of the excitation light (23) comprises at least one local minimum (6), and
- registering the fluorescence light (27) from the excited individual molecules (5) of the substance for different positions x_{N} of the at least one minimum (6) in the area (1) of interest of the sample (2),
**characterised in**
- **that** the minimum value of the distances of the individual molecules (5) of the substance in the area (1) of interest of the sample (2) is d = λ/(2nsinα √(1 + I/I_{S})), wherein
- λ is the wavelength of the excitation light,
- n is the refraction index of the optical material in which the at least one minimum is formed,
- α is half an aperture angle of an optical arrangement by which the excitation light is directed onto the sample,
- I is the maximum intensity of the excitation light (23) in the sample (2) and
- I_{S} is a fluorescence excitation saturation intensity of the excitation light depending on the substance,
- wherein the maximum intensity I of the excitation light (23) in the sample (2) is higher than the fluorescence excitation saturation intensity I_{S},
- **that** the intensity of the fluorescence light (27) from one individual molecule (5) at the location of the local minimum (6) of the intensity distribution of the excitation light (23) is at maximum half as high as at a location of the maximum intensity of the excitation light (23) in the sample (2),
- **that** distances (7) between next neighbouring positions x_{N} of the at least one minimum (6), in which the fluorescence light (27) from the excited individual molecules (5) of the substance is registered, are not greater than half the minimum value d,
- wherein the minimum value d corresponds to a full width at half maximum of a course of the intensity I_{F} of the fluorescence light (27) from the individual molecule (5) over the positions x_{N} of the local minimum (6) in which the fluorescence light (27) is registered, the course being influenced by the at least one minimum (6),
- **that** the locations x_{M} of the individual molecules (5) of the substance are deduced from the course of the intensity I_{F} of the fluorescence light (27) from the respective molecule (5) over the positions x_{N} of the at least one minimum (6) in the area (1) of interest of the sample (2) in that a function (9) having a local minimum is fitted to the course of the intensity I_{F} of the fluorescence light (27) from the respective molecule (5) over the positions x_{N} of the at least one minimum (6) and in that the location x_{M} of the respective molecule (5) is set to be equal to the position of the local minimum of the fitted function (9) or in that the location x_{M} of the respective molecule (5) is set to be equal to a position x_{N} of the at least one minimum (6) which distinguishes itself in that fewer fluorescence light (27) is registered from the respective molecule (5) than in positions x_{N} of the minimum (6) which are next neighbours in different directions.

2. Method of claim 1, **characterised in that** the function (9) having the local minimum, which is fitted to the course of the intensity I_{F} of the fluorescence light (27) from the respective molecule (5) over the positions x_{N} of the at least one minimum (6), is a quadratic function.

3. Method of any of the preceding claims, **characterised in that** the distance (7) between next neighbouring positions x_{N} of the at least one minimum (6), in which the fluorescence light (27) from the excited individual molecules (5) of the substance is registered, is not greater than a low excitation area (32) around the minimum (6), in which the respective molecule is only excited for the emission of fluorescence light (27) at a minimum intensity.

4. Method of any of the preceding claims, **characterised in**
- **that**, by means of an adjusting signal, at a transfer probability increasing with the intensity of the adjusting signal, the molecules (4) of the substance are transferable
- out of their fluorescent state into a non-fluorescent state or
- out of a non-fluorescent state into their fluorescent state,
- **that**, when considering all molecules (4) independently of their state, distances between next neighbouring molecules (4) of the substance are smaller than the minimum value d in the area (1) of interest of the sample (2), and
- **that** the distances between the individual molecules (5) of the substance in the fluorescent state are adjusted by means of the adjusting signal.

5. Method of claim 4, **characterised in**
- **that** the molecules (4) of the substance, oppositely to the direction of their transfer by means of the adjusting signal, return into their original state
- under the influence of a return signal and/or
- spontaneously
at a further transfer probability,
- **that** repeatedly or continuously, for respective other individual molecules (5) in the fluorescent state, the distances of the minimum value d are adjusted by means of the adjusting signal and, if given, by means of the return signal, and
- **that** the respective positions of the individual molecules (5) in the fluorescent state are determined to obtain an image of the distribution of the molecules (4) of the substance in the sample (2).

6. Method of claim 4 or 5, **characterised in**
- **that** the adjusting signal is adjusting light,
- wherein the molecules (4) of the substance are optionally transferred out of their fluorescent state into their non-fluorescent state by means of the adjusting light, wherein the non-fluorescent state of the molecules (4) of the substance optionally is an electronic energy state and/or the adjusting light optionally has the same wavelength as the excitation light (23).

7. Method of any of the preceding claims, **characterised in that** the at least one minimum (6) is a point-shaped minimum whose position in the area (1) of interest of the sample (2) is changed in all extensional directions of the sample (2), and that the locations x_{M} of the individual molecules (5) of the substance, in all extensional directions of the sample (2), are deduced from the course of the intensity I_{F} of the fluorescence light (27) from the respective molecule (5) over the positions x_{N} of the at least one minimum (6) in the area (1) of interest of the sample (2), wherein the fluorescence light (27) is optionally registered out of a registration area including the at least one minimum (6) by meaans of a point detector (30) confocally arranged with regard to the minimum (6).

8. Method of any of the claims 1 to 6, **characterised in that** the at least one minimum (6) extends along a line or plane, that its position x_{N} in the area (1) of interest of the sample (2) is changed in a scanning direction (14, 15) perpendicular to the line or plane, and that the locations x_{M} of the individual molecules (5) of the substance in the scanning direction (14, 15) are deduced from the course of the intensity I_{F} of the fluorescence light (27) from the respective molecule (5) over the positions x_{N} of the at least one minimum (6) in the area (1) of interest of the sample (2), wherein the line or plane is optionally oriented differently with regard to the sample (2) to determine the locations x_{M} of the individual molecules (5) of the substance in different spatial directions.

9. Method of any of the preceding claims, **characterised in that** the intensity distribution of the excitation light comprises a plurality of minima (6) whose positions in the area (1) of interest of the sample (2) are changed together, wherein the fluorescence light (27) from the excited individual molecules (5) of the substance are separately registered for each of the minima (6).

10. Method of any of the preceding claims, **characterised in**
- **that** the fluorescence light (27) is registered by means of a light sensor array (29) which is fixed with regard to the sample (2),
- wherein, optionally, frames are continuously read out of the light sensor array (29) and assigned to the respective positions of the at least one minimum (6) in the sample (2), wherein the at least one minimum (6) is optionally continuously moved within the sample (2).

11. Method of claim 10, **characterised in that** the distances of the individual molecules (5) of the substance in the area (1) of interest of the sample (2) are greater than a diffraction limit at the wavelength of the fluorescence light (27), and that the locations x_{M} of the individual molecules (5) of the substance in the fluorescent state are additionally determined from a distribution (13) of the total registered fluorescence light (27) from the respective molecule (5) over the light sensor array (29).

## Revendications

1. Procédé de détermination des localisations x_{M} de molécules individuelles (5) d'une substance dans un échantillon (2),
- dans lequel les molécules individuelles (5) de la substance se trouvent dans un état fluorescent, dans lequel elles peuvent être excitées avec une lumière d'excitation (23) pour l'émission d'une lumière fluorescente (27),
- dans lequel les distances entre les molécules individuelles (5) de la substance respectent, dans une zone intéressante (1) de l'échantillon (2) une valeur minimale et
- dans lequel le procédé comprend les étapes suivantes :
- l'excitation des molécules individuelles (5) de la substance avec la lumière d'excitation (23) pour l'émission de lumière fluorescente (27), dans lequel une répartition d'intensité de la lumière d'excitation (23) comprend au moins un minimum local (6) et
- l'enregistrement de la lumière fluorescente (27) provenant des molécules individuelles (5) excitées de la substance pour différentes positions x_{N} de l'au moins un minimum (6) dans la zone intéressante (1) de l'échantillon (2),
**caractérisé en ce que**
- la valeur minimale des distances entre les molécules individuelles (5) de la substance dans la zone intéressante (1) de l'échantillon (2) d = λ/(2sinα √(1+I/Iₛ)), dans lequel
- A est la longueur d'onde de la lumière d'excitation,
- n est l'indice de réfraction du matériau optique, dans lequel l'au moins un minimum est formé,
- α est le demi-angle d'ouverture d'un dispositif optique avec lequel la lumière d'excitation est dirigée vers l'échantillon,
- I est l'intensité maximale de la lumière d'excitation (23) dans l'échantillon (2) et
- Iₛ est une intensité de saturation d'excitation fluorescente de la lumière d'excitation, qui dépend de la substance,
- dans lequel l'intensité maximale I de la lumière d'excitation (23) dans l'échantillon (2) est supérieure à l'intensité de saturation d'excitation fluorescente Iₛ,
- l'intensité de la lumière fluorescente (27) provenant d'une seule molécule (5) à la localisation du minimum local (6) de la répartition d'intensité de la lumière d'excitation (23) soit au maximum la moitié par rapport à la localisation de l'intensité maximale de la lumière d'excitation (23) dans l'échantillon (2),
- des distances (7) entre les positions x_{N} les plus proches de l'au moins un minimum (6), dans lesquelles la lumière fluorescente (27) provenant des molécules individuelles (5) excitées de la substance est enregistrée, ne sont pas supérieures à la moitié de la valeur minimale d,
- dans lequel la valeur minimale d correspond à une largeur de demi-valeur d'un tracé, influencé par l'au moins un minimum (6), de l'intensité I_{F} de la lumière fluorescente (27) provenant de la seule molécule (5) sur les positions x_{N} du minimum local (6), auxquelles la lumière fluorescente (27) est enregistrée,
- les localisations x_{M} des molécules individuelles (5) de la substance sont déduites du tracé de l'intensité I_{F} de la lumière fluorescente (27) provenant de la molécule (5) correspondante sur les positions x_{N} de l'au moins un minimum (6) dans la zone intéressante (1) de l'échantillon (2), grâce au fait qu'une fonction (9) avec un minimum local est adaptée au tracé de l'intensité I_{F} de la lumière fluorescente (27) provenant de la molécule (5) correspondante sur les positions x_{N} de l'au moins un minimum (6) et la localisation x_{M} de la molécule (5) correspondante est égalisée à la position du minimum local de la fonction (9) adaptée ou grâce au fait que la localisation x_{M} de la molécule (5) correspondante est égalisée à une position x_{N} de l'au moins un minimum (6), qui se distingue par le fait que moins de lumière fluorescente (27) provenant de la molécule (5) est enregistrée qu'aux positions x_{N} les plus proches du minimum (6) dans différentes directions.

2. Procédé selon la revendication 1, **caractérisé en ce que** la fonction (9) avec un minimum local, qui est adaptée au tracé de l'intensité I_{F} de la lumière fluorescente (27) provenant de la molécule (5) correspondante sur les positions x_{N} de l'au moins un minimum (6), est une fonction quadratique.

3. Procédé selon l'une des revendications précédentes, **caractérisé en ce que** la distance (7) entre des positions x_{N} les plus proches de l'au moins un minimum (6), auxquelles la lumière fluorescente (27) provenant des molécules individuelles (5) excitées de la substance est enregistrée, n'est pas supérieure à une zone faible en excitation (32) autour du minimum (6), dans laquelle la molécule (5) correspondante n'est excitée que pour l'émission de lumière fluorescente (27) avec une intensité minimale.

4. Procédé selon l'une des revendications précédentes, **caractérisé en ce que**
- les molécules (4) de la substance peuvent passer, avec un signal de réglage, avec une probabilité de transition augmentant avec l'intensité du signal de réglage,
- de leur état fluorescent vers un état non fluorescent ou
- d'un état non fluorescent vers leur état fluorescent,
- lorsqu'on considère toutes les molécules (4) indépendamment de leur état, les distances entre les molécules (4) les plus proches de la substance dans la zone intéressante (1) de l'échantillon (2) sont inférieures à la valeur minimale d et
- les distances entre les molécules individuelles (5) de la substance dans l'état fluorescent sont réglées avec le signal de réglage.

5. Procédé selon la revendication 4, **caractérisé en ce que**
- les molécules (4) de la substance retournent, à l'encontre de leur sens de passage avec le signal de réglage
- sous l'effet d'un signal de retour et/ou
- spontanément,
avec une autre probabilité de transition, dans leur état initial,
- de manière répétitive ou en permanence, pour d'autres molécules individuelles (5) dans l'état fluorescent, les distances avec la valeur minimale d sont réglées avec le signal de réglage et, le cas échéant le signal de retour et
- les positions des molécules individuelles (5) dans l'état fluorescent sont déterminées afin d'obtenir une image de la répartition des molécules (4) de la substance dans l'échantillon (2).

6. Procédé selon l'une des revendications 4 ou 5, **caractérisé en ce que**
- le signal de réglage est une lumière de réglage,
- dans lequel les molécules (4) de la substance sont passées, avec la lumière de réglage, en option, de leur état fluorescent vers leur état non fluorescent, dans lequel l'état non fluorescent des molécules (4) de la substance est en option un état énergétique électronique et/ou la lumière de réglage présente en option la même longueur d'onde que la lumière d'excitation (23).

7. Procédé selon l'une des revendications précédentes, **caractérisé en ce que** l'au moins un minimum (6) est un minimum ponctuel dont la position dans la zone intéressante (1) de l'échantillon (2) est modifiée dans toutes les directions d'extension de l'échantillon (2) et **en ce que** les localisations x_{M} des molécules individuelles (5) de la substance dans toutes les directions d'extension de l'échantillon (2) sont déduites du tracé de l'intensité I_{F} de la lumière fluorescente (27) provenant de la molécule individuelle (5) sur les positions x_{N} de l'au moins un minimum (6) dans la zone intéressante (1) de l'échantillon (2), dans lequel la lumière fluorescente (27) est enregistrée en option à partir d'une zone d'enregistrement entourant l'au moins un minimum (6) avec un détecteur ponctuel (30) disposé de manière confocale avec le minimum (6).

8. Procédé selon l'une des revendications 1 à 6, **caractérisé en ce que** l'au moins un minimum (6) s'étend le long d'une ligne ou d'un plan, **en ce que** sa position x_{N} dans la zone intéressante (1) de l'échantillon (2) est modifiée dans une direction de balayage (14, 15) transversale par rapport à la ligne ou au plan et **en ce que** les localisations x_{M} des molécules individuelles (5) de la substance dans la direction de balayage (14, 15) sont déduites du tracé de l'intensité I_{F} de la lumière fluorescente (27) provenant de la molécule (5) correspondante sur les positions x_{N} de l'au moins un minimum (6) dans la zone intéressante (1) de l'échantillon (2), dans lequel la ligne ou le plan est orienté en option différemment par rapport à l'échantillon (2) afin de déterminer les localisations x_{M} des molécules individuelles (5) de la substance dans différentes directions de l'espace.

9. Procédé selon l'une des revendications précédentes, **caractérisé en ce que** la répartition d'intensité de la lumière d'excitation présente plusieurs minima (6) dont les positions dans la zone intéressante (1) de l'échantillon (2) sont modifiées en commun, dans lequel la lumière fluorescente (27) provenant des molécules individuelles (5) excitées de la substance est enregistrée séparément pour chacun des minima (6).

10. Procédé selon l'une des revendications précédentes, **caractérisé en ce que**
- la lumière fluorescente (27) est enregistrée avec une matrice de capteurs photosensibles (29) en face de l'échantillon (2),
- dans lequel, en option, les images provenant de la matrice de capteurs photosensibles (29) sont lues et mises en correspondance avec les positions respectives de l'au moins un minimum (6) dans l'échantillon (2), dans lequel l'au moins un minimum (6) est décalé en option de manière continue dans l'échantillon (2).

11. Procédé selon la revendication 10, **caractérisé en ce que** les distances des molécules individuelles (5) de la substance dans la zone intéressante (1) de l'échantillon (2) sont supérieure à la limite de diffraction à la longueur d'onde de la lumière fluorescente (27) et **en ce que** les localisations x_{M} des molécules individuelles (5) de la substance dans l'état fluorescent sont en outre déterminées, à partir de la répartition (13) de la lumière fluorescente (27) provenant de la molécule individuelle (5) enregistrée au total, à l'aide de la matrice de capteurs photosensibles (29).
